# EUROPÄISCHE PATENTSCHRIFT

(11) **EP 3 099 604 B1**
(45) Veröffentlichungstag und Bekanntmachung des Hinweises auf die Patenterteilung: **03.04.2019**
(21) Anmeldenummer: 14703836.8
(22) Anmeldetag: 11.02.2014
(51) Int. Cl.: B65G 1/04

(54) **MITNEHMEREINHEIT FÜR EIN ZUGMITTEL, ANTRIEBSKETTE MIT EINER MITNEHMEREINHEIT SOWIE LAGERSYSTEM MIT ZUMINDEST EINEM KETTENTRIEB**
DRIVING UNIT FOR A TRACTION MEANS, DRIVE CHAIN WITH A DRIVING UNIT, AND STORAGE SYSTEM WITH AT LEAST ONE CHAIN DRIVE
ENSEMBLE ENTRAÎNEUR POUR MOYEN DE TRACTION, CHAÎNE D'ENTRAÎNEMENT DOTÉE D'UN ENSEMBLE ENTRAÎNEUR AINSI QUE SYSTÈME DE STOCKAGE DOTÉ D'AU MOINS UN ENTRAÎNEMENT PAR CHAÎNE

(30) Priorität: 28.01.2014 DE 102014101005
(43) Veröffentlichungstag der Anmeldung: 07.12.2016
(73) Patentinhaber: SSI Schäfer AG, 8213 Neunkirch (CH)
(72) Erfinder: VONRÜTI, Beat, CH-8317 Tagelswangen (CH)
(74) Vertreter: Witte, Weller & Partner Patentanwälte mbB
(86) Internationale Anmeldenummer: PCT/EP2014/052574
(87) Internationale Veröffentlichungsnummer: WO 2015/113647

(56) Entgegenhaltungen:
- EP-A1- 0 078 438
- WO-A1-97/15513
- WO-A1-98/09892
- WO-A1-2011/000427
- DE-A1- 10 115 754
- DE-C1- 3 241 129
- FR-A1- 2 625 184
- JP-A- S62 215 408
- US-A1- 2011 168 528
- US-B1- 6 571 936

## Beschreibung

Die vorliegende Erfindung betrifft eine Mitnehmereinheit für ein Zugmittel, insbesondere für eine Antriebskette eines Lagersystems, insbesondere für einen Tablarauszug eines Lagerlifts. Die Erfindung betrifft ferner eine Antriebskette mit einer derartigen Mitnehmereinheit sowie ein Lagersystem, insbesondere einen Lagerlift, das einen Auszug oder Extraktor mit zumindest einem Kettentrieb aufweist.

Aus der FR 2 625 184 A1 ist eine Vorrichtung nach dem Oberbegriff des Anspruchs 1, zur Entnahme von Kästen bekannt, die auf Regalen zu beiden Seiten eines Gangs installiert und an ihren beiden Enden mit einer Entnahmegleitschiene ausgestattet sind, wobei die Vorrichtung mindestens eine endlose Kette mit zwei Kurbelzapfen aufweist, die in die Gleitschienen der Kästen eingreifen, wobei die beiden Kurbelzapfen derselben Kette jeweils in eine Entnahmegleitschiene eines Kastens eingreifen, wenn sich dieser in der Mitte des Gangs oberhalb der Entnahmevorrichtung befindet, und wobei die Bewegungsbahn jeder Kette einen konvexen Bereich definiert.

Ähnliche Vorrichtungen sind aus den Druckschriften WO 1997/015513 A1, DE 101 15 754 A1, JP S62 215408 A, WO 2011/000427 A1, US 6,571,936 B1 sowie der US 2011/168528 A1 bekannt.

Aus der WO 98/09892 A1 ist eine Abstreiferanordnung zur Verwendung in einem Klärbecken bekannt, mit einem Abstreifer, der über zwei nebeneinander angeordnete Antriebsketten bewegt wird. Aus der EP 0 078 438 A1 ist ein Reparaturverfahren und ein Reparaturteil für Mitnehmerstege von Stegkettenförderern bekannt. Aus der Aus der DE 32 41129 C1 ist ein Kettenkratzerförderer für den untertägigen Grubenbetrieb bekannt, mit in horizontaler Ebene gelenkig miteinander verbundenen, die Förderrinne bildenden Rinnenschüssen und einem umlaufenden, im Obertrum und Untertrum der Förderrinne geführten, mit Kratzeisen Kettenband.

Zugmittel, wie etwa Antriebsketten, sind im Stand der Technik hinreichend bekannt und können etwa zur Übertragung von Kräften oder Momenten sowie zu Transport- oder Transferzwecken verwendet werden. Der Begriff "Zugmittel" soll in diesem Zusammenhang nicht einschränkend verstanden werden, im Stand der Technik sind verschiedene Zugmittel bekannt, die sowohl gezogen als auch geschoben verwendbar sind. Beispielhaft sind Kettentriebe mit Antriebsketten vorstellbar, die sowohl als Schubketten als auch als Zugketten verwendbar sind. Zugmittel, insbesondere formgebundene Zugmittel wie etwa Ketten, Zahnriemen oder dergleichen, können eine hochgenaue, wiederholsichere Bewegungsübertragung und Positionierung erlauben.

Auf dem Gebiet der Logistik sind viele Anwendungen für Zugmittel, insbesondere Antriebsketten, und mit diesen ausgerüstete Zugmitteltriebe, insbesondere Kettentriebe, denkbar. So ist beispielsweise aus der DE 101 15 754 A1 ein Lagerlift mit einem Vertikalförderer sowie einem Horizontalförderer für Lagergutträger bekannt, wobei zur Horizontalbewegung ein Kettentrieb vorgesehen ist, der zumindest zwei miteinander gekoppelte Ketten umfasst, um zu verlagernde Lagergutträger greifen und verfahren zu können.

Auf dem Gebiet der Lagersysteme sind verschiedene Lageranordnungen, insbesondere Regalanordnungen bekannt, die nach dem sogenannten "Ware-zum-Mann" Prinzip gestaltet sein können. Beispielsweise kann es sich dabei um sogenannte dynamische Lagersysteme handeln. Dynamische Lagersysteme können zur Aufnahme von Lagergütern in Lagergutträgern ausgebildet sein, die mit geeigneten Mitteln verfahren oder gefördert werden können, um etwa zwischen einer Lagerposition und einer Handhabungs- oder Übergabeposition verlagert werden zu können.

Dynamische Lagersysteme können beispielsweise als sogenannte Paternosterlager, als Verschieberegallager, als Umlaufregallager, als Lagerlifte oder in ähnlicher Weise gestaltet sein. Lagersysteme weisen häufig Zugmitteltriebe, insbesondere Kettentriebe oder Zahnriementriebe, auf, die zur Förderung bzw. Positionierung genutzt werden können. Zu diesem Zweck können beim Zugmittel sogenannte Ausleger oder Mitnehmer angeordnet sein, die etwa in Taschen oder Ausnehmungen von zu bewegenden Objekten eingreifen können, um diese in gewünschter Weise zu verfahren.

Es hat sich jedoch gezeigt, dass Zugmitteltriebe unter bestimmten Umständen zu erhöhtem Verschleiß oder gar zu Funktionsausfällen neigen können. Dies kann insbesondere dann der Fall sein, wenn Bauraumrestriktionen oder sonstige Randbedingungen berücksichtigt werden müssen. Dies kann beispielsweise zu Gestaltungen von Zugmitteltrieben, insbesondere von Kettentrieben, führen, bei denen ein Kraftangriff außermittig erfolgt. Ein außermittiger Kraftangriff ist häufig auch mit der Einleitung eines Moments bzw. Biegemoments in das Zugmittel bzw. die Kette verbunden, für den das Zugmittel bzw. die Kette nicht ausgelegt ist. Derartige Zustände können beispielsweise bei zugmittelbasierten Auszügen bzw. Extraktoren für Lagerlifte auftreten. Derartige Extraktoren oder Auszüge weisen häufig zumindest zwei voneinander beabstandete Zugmitteltriebe oder Kettentriebe auf, die dazu ausgebildet sind, an zwei Enden eines Lagergutträgers (oder: Tablars) anzugreifen, um den Lagergutträger im Lagerlift zu verschieben.

Es versteht sich, dass bei Lagerliften, generell bei Lagersystemen, weitere Anwendungsfälle für Zugmitteltriebe bzw. Kettentriebe denkbar sind. Diese können allgemein das Bewegen, Umsetzen oder Verlagern von Lagergutträgern umfassen. Ferner ist die Verwendung von Zugmitteltrieben bzw. Kettentrieben auch für Transporteinrichtungen zur Verlagerung von Regalen oder Regalebenen sowie zum Transport von Artikeln denkbar.

Der Erfindung liegt die Aufgabe zugrunde, eine Mitnehmereinheit für ein Zugmittel, insbesondere für eine Antriebskette eines Lagersystems, anzugeben, die die Belastung des Zugmittels reduziert und möglichst einen fehlerarmen oder fehlerfreien Betrieb bei geringem Verschleiß erlaubt. Ferner sollen sich die Mitnehmereinheit und ein damit versehenes Zugmittel möglichst zur Verwendung bei Lagersystemen, insbesondere bei Lagerliften, eignen. Vorzugsweise eignen sich die Mitnehmereinheit und ein damit versehenes Zugmittel zur Verwendung bei Extraktoren oder Auszügen zum Umsetzen von Lagergutträgern in einem Lagerlift. Es ist ferner bevorzugt, eine Antriebskette mit einer Mitnehmereinheit bzw. einen Lagerlift mit einem Auszug mit zumindest einem derartigen Zugmitteltrieb anzugeben, die einen verschleißarmen und störungsfreien Betrieb des Lagerlifts erlauben und dabei insbesondere eine erhöhte Bedienersicherheit gewährleisten können.

Betreffend die Mitnehmereinheit wird diese Aufgabe durch eine Mitnehmereinheit nach Anspruch 1, für ein als Antriebskette eines Lagersystems gestaltetes Zugmittel gelöst, wobei die Mitnehmereinheit zumindest ein Mitnehmerelement aufweist, das dazu ausgebildet ist, das Zugmittel insbesondere quer zu einer Haupterstreckungsrichtung des Zugmittels zu umgreifen, wobei das zumindest eine Mitnehmerelement einen Rücken sowie einen Mitnahmeausleger und einen Stützausleger zur Befestigung am Zugmittel aufweist, wobei der Mitnahmeausleger und der Stützausleger mit Verbindungselementen des Zugmittels koppelbar sind, wobei beim Mitnahmeausleger ein seitlich hervorstehender Mitnahmezapfen angeordnet ist, und wobei die Mitnehmereinheit ferner am Mitnehmerelement einen Führungsabschnitt aufweist, der an der Seite des Rückens vorgesehen ist, die im montierten Zustand vom Zugmittel abgewandt ist, wobei der Führungsabschnitt im montierten Zustand vom Zugmittel abgewandt und zur seitlichen Führung mit einer Führungsschiene koppelbar ist, wobei der Führungsabschnitt eine erste Führungsflanke und eine zweite Führungsflanke aufweist, die dazu ausgebildet sind, mit seitlichen Führungsflächen der Führungsschiene zusammenzuwirken, wobei zwischen dem Mitnahmeausleger und dem Stützausleger Innenstege angeordnet sind, wobei die Innenstege mit entsprechenden Ausnehmungen für Verbindungselemente und/oder Kettenbolzen versehen sind, die im montierten Zustand durch den Innensteg hindurch ragen, und wobei der Mitnahmeausleger in den Mitnahmezapfen mündet.

Die Aufgabe der Erfindung wird auf diese Weise vollständig gelöst.

Erfindungsgemäß kann nämlich die Mitnehmereinheit das Zugmittel klammerartig oder brückenartig umspannen und somit Kräfte bzw. Momente, die über den Mitnahmezapfen in das Zugmittel eingeleitet werden, möglichst großflächig verteilen. Mit anderen Worten können der Rücken sowie der Mitnahmeausleger und der Stützausleger gemeinsam eine brückenähnliche Gestaltung mit im Wesentlichen U-förmigem Querschnitt definieren. Mit anderen Worten kann die Mitnehmereinheit etwa sattelförmig auf das Zugmittel aufgesetzt werden.

Kräfte, die über einen seitlichen Mitnahmezapfen auf das Zugmittel übertragen werden, erzeugen im Allgemeinen außermittige Belastungen, die beim Zugmittel eine Biegebeanspruchung erzeugen können, für die das Zugmittel nicht ausgebildet ist. Die Mitnehmereinheit mit dem zumindest einen Mitnehmerelement kann eine "Versteifung" des Zugmittels im gefährdeten Bereich bewirken, so dass die Gefahr von Verklemmungen, Funktionsstörungen oder gar Beschädigungen des Zugmittels deutlich herabgesetzt werden kann.

Insbesondere bei Auszügen oder Extraktionsantrieben für Lagerlifte oder dergleichen sind Ausgestaltungen vorstellbar, bei denen zwei Zugmittel voneinander beabstandet und mit einander zugewandten Mitnahmezapfen angeordnet sind, um an einen Lagergutträger anzukoppeln, um diesen zu versetzen. Dies kann insbesondere ein Verschieben des Lagergutträgers, also eine im Wesentlichen gleitende Bewegung des Lagergutträgers, umfassen. Derartige Bewegungen können insbesondere bei hohen Belastungen des Lagergutträgers oder bei ungünstigen Reibpaarungen mit hohen außermittig eingeleiteten Seitenkräften oder Querkräften bei den Zugmitteln einhergehen. Dies kann beispielsweise dann der Fall sein, wenn ein Lagergutträger mit einer Vielzahl schwerer Artikel bestückt ist.

In einer bevorzugten Ausgestaltung ist das Zugmittel als Antriebskette ausgestaltet. Bei der Antriebskette kann es sich insbesondere um eine Rollenkette handeln. Bei einer Rollenkette sind Rollen an Kettenbolzen aufgenommen, insbesondere drehbar gelagert. Folglich kann es bei einer Bewegung der Kette, etwa bei einer Relativbewegung gegenüber einer Kettenführung, zu einer Wälzbewegung der Rollen relativ zur Führung kommen.

Ketten weisen ferner Kettenlaschen auf, die miteinander gekoppelt sind, um Glieder der Kette zu bilden. Ein üblicher Kettenaufbau kann beispielsweise eine Folge paarweise beabstandet angeordneter Innenlaschen umfassen, die sich mit Außenlaschen abwechseln. Die Innenlaschen und die Außenlaschen können sich abschnittsweise überlappen und durch Kettenbolzen oder ähnliche Verbindungselemente miteinander gekoppelt sein. Eine Anordnung umfassend zwei oder mehr parallele Innenlaschen sowie zwei oder mehr diesen zugeordnete parallele Außenlaschen wird üblicherweise als Kettenglied bezeichnet.

Die Innenlaschen und/oder die Außenlaschen einer Antriebskette können (radial) über die Kettenbolzen bzw. die an diesen aufgenommenen Rollen überstehen. Dieser Überstand kann genutzt werden, um eine gewisse Seitenführung der Kette zu gewährleisten. So kann eine Antriebskette beispielsweise an einer erhabenen Gleitfläche geführt sein, wobei die Kettenbolzen oder deren Rollen zum Gleiten oder Wälzen entlang der Gleitfläche ausgestaltet sind. Die Innenlaschen oder Außenlaschen können die erhabene Gleitfläche seitlich umgreifen und insbesondere durch Führungsflächen geführt werden, die senkrecht zur Gleitfläche ausgebildet sind. Da jedoch bei herkömmlichen Ketten ein (radialer) Überstand der Innenlaschen oder Außenlaschen gegenüber den Rollen oder Kettenbolzen begrenzt ist, kann nur eine begrenzte Überlappung für die seitliche Führung bereitgestellt werden.

Die Mitnehmereinheit mit dem zumindest einen Mitnehmerelement kann die seitliche Führung des Zugmittels, insbesondere der Antriebskette, deutlich verbessern, da der Führungsabschnitt grundsätzlich eine größere (seitliche) Führungsfläche bzw. Überlappungsfläche mit einer Führungsschiene bereitstellen kann. Dies kann insbesondere bei geradlinigen (translatorischen) Bewegungen der Antriebskette genutzt werden, indem eine Seite der Kette auf einer Gleitschiene gelagert ist, bei der die Rollen oder die Kettenbolzen bzw. die Innenlaschen oder die Außenlaschen entsprechende Führungsflächen kontaktieren. An der der Gleitschiene abgewandten Seite des Zugmittels kann eine Führungsschiene angeordnet sein, die mit dem Führungsabschnitt des zumindest einen Mitnehmerelements zusammenwirken kann. Anders gesagt kann das Zugmittel auf diese Weise "oben" und "unten" geführt sein, um Seitenkräfte oder zumindest teilweise seitlich wirkende Momente aufnehmen zu können.

Sofern vorstehend und nachstehend von einer "seitlichen" Richtung die Rede ist, soll primär auf eine Richtung abgestellt werden, die senkrecht zu einer Haupterstreckungsrichtung des Zugmittels ist und ferner parallel zu Achsen orientiert ist, die etwa durch Kettenbolzen oder auf diesen aufgenommene Rollen definiert sind. Sofern also im Sinne dieser Offenbarung ein Element seitlich versetzt von einem anderen Element ist, sind die Elemente entlang dieser Richtung voneinander beabstandet angeordnet.

Der Mitnahmeausleger kann mit einem zumindest abschnittsweise seitlich hervorstehenden Mitnahmezapfen versehen sein, der dazu ausgebildet ist, in entsprechende Aussparungen oder Ausnehmungen bei Lagergutträgern (oder: Tablaren) oder bei einer Transportauflage bzw. einem Transportrahmen hierfür einzugreifen, um den Lagergutträger in gewünschter Weise umzusetzen. Es versteht sich, dass der Mitnahmezapfen nicht zwingend rotationssymmetrisch gestaltet sein muss. Der Mitnahmezapfen kann zumindest abschnittsweise als Mitnahmebolzen gestaltet sein, es sind jedoch auch andere Gestaltungen denkbar. Allgemein kann der Mitnahmezapfen auch als Mitnahmenocken bezeichnet werden. Der Mitnahmenocken weist allgemein eine zumindest abschnittsweise vorspringende Kontur auf. Es sind alternativ verschiedene Ausgestaltungen denkbar, bei denen der Mitnahmezapfen zumindest abschnittsweise mit Vertiefungen und/oder Ausnehmungen versehen ist, die mit entsprechenden vorspringenden Gegenkonturen koppelbar sind.

Das zumindest eine Mitnehmerelement kann als integrales Mitnehmerelement gestaltet sein. Insbesondere kann das zumindest eine Mitnehmerelement einstückig gestaltet sein. Es ist jedoch auch vorstellbar, dass das Mitnehmerelement, insbesondere im Bereich des Mitnahmezapfens, mehrstückig ausgebildet ist. Der Mitnahmeausleger kann sich ausgehend von einem ersten Ende des Rückens des Mitnehmerelements erstrecken. Der Stützausleger kann sich ausgehend von einem zweiten Ende des Mitnehmerelements erstrecken.

Gemäß einer beispielhaften Ausgestaltung des Mitnehmerelements sind der Mitnahmeausleger und der Stützausleger im montierten Zustand voneinander abgewandten, insbesondere einander gegenüberliegenden, Laschen des Zugmittels benachbart und vorzugsweise mit einander zugewandten Innenflächen versehen.

Es kann ferner bevorzugt sein, dass der Mitnahmeausleger und der Stützausleger zur Kopplung mit einer Mehrzahl von Verbindungselementen des Zugmittels ausgebildet sind, die insbesondere parallel zueinander beabstandet angeordnet sind und quer zur Haupterstreckungsrichtung des Zugmittels orientiert sind, wobei jedes gekoppelte Verbindungselement sowohl mit dem Mitnahmeausleger als auch mit dem Stützausleger koppelbar ist. Insbesondere können der Mitnahmeausleger und der Stützausleger zur Kopplung mit zwei Verbindungsbolzen eines Kettengliedes ausgestaltet sein. So ist es vorstellbar, das zumindest eine Mitnehmerelement als "Ersatz" für zwei Außenlaschen der Antriebskette vorzusehen. Es ist jedoch auch vorstellbar, das Mitnehmerelement außen an die Antriebskette anzukoppeln, ohne Außenlaschen der Antriebskette zu ersetzen. In einem solchen Fall kann es von Vorteil sein, wenn die Verbindungselemente, insbesondere die Verbindungsbolzen, des Zugmittels verlängert sind, um genügend (seitliche) Überdeckung mit dem zumindest einen Mitnehmerelement zu schaffen.

Es ist ferner bevorzugt, wenn der Führungsabschnitt dazu ausgebildet ist, an die Führungsschiene anzugreifen, um unerwünschte seitliche Auslenkungen des Zugmittels zu verhindern. Erfindungsgemäß weist der Führungsabschnitt eine erste Führungsflanke und eine zweite, die dazu ausgebildet sind, ein Führungsprofil der Führungsschiene seitlich zu umgreifen. Mit anderen Worten kann das zumindest eine Mitnehmerelement beispielsweise im Bereich seines Rückens H-förmig gestaltet sein. Beispielhaft kann die erste Führungsflanke bei dem Ende des Rückens ausgebildet sein, von dem sich der Mitnahmeausleger aus erstreckt. Demgemäß kann die zweite Führungsflanke bei dem anderen Ende des Rückens vorgesehen sein, von dem sich der Stützausleger aus erstreckt. Der Mitnahmeausleger und die erste Flanke sowie der Stützausleger und die zweite Flanke können sich in entgegengesetzten Richtungen ausgehend vom Rücken des zumindest einen Mitnehmerelements aus erstrecken.

Es kann ferner von Vorteil sein, wenn der Mitnahmezapfen zumindest abschnittsweise parallel zu Verbindungselementen des Zugmittels orientiert ist und insbesondere im Wesentlichen in einer Ebene angeordnet ist, die durch Längsachsen zweier benachbarter Verbindungselemente (oder: Verbindungsbolzen) des Zugmittels definiert ist. Mit anderen Worten können die beiden Verbindungselemente oder Verbindungsbolzen des Kettengliedes, mit denen das Mitnehmerelement gekoppelt ist, und der Mitnahmezapfen im Wesentlichen in einer Ebene angeordnet sein. Auf diese Weise kann die Einleitung weiterer potentiell nachteiliger Momente vermieden werden. Es gibt nämlich konstruktionsbedingt keinen wesentlichen Hebel, der senkrecht zur durch die Verbindungselemente und den Mitnahmezapfen definierten Ebene orientiert ist. Es versteht sich, dass der Mitnahmezapfen grundsätzlich auch von der Ebene beabstandet sein kann, die durch Längsachsen zweier benachbarter Verbindungselemente des Zugmittels definiert ist.

Gemäß einer alternativen Ausgestaltung der Mitnehmereinheit weist der Führungsabschnitt zumindest eine Führungsrolle auf, die am Rücken des zumindest einen Mitnehmerelements drehbar aufgenommen ist und dazu ausgebildet ist, an die Führungsschiene anzugreifen. Vorzugweise weist der Führungsabschnitt zwei in der Haupterstreckungsrichtung zueinander versetzte Führungsrollen, die mit ihrem Umfang in ein nutförmiges Führungsprofil der Führungsschiene eingreifen können. Die zumindest eine Führungsrolle kann an einem Bolzen aufgenommen sein, der im Wesentlichen senkrecht zum Rücken orientiert ist. Eine Längsachse des Bolzens kann parallel zu einer Höhenerstreckungsrichtung orientiert sein.

Auf diese Weise kann die seitliche Führung an der Führungsschiene über zumindest einen Wälzköper erfolgen, der im Falle seitlicher Belastungen Führungsflächen der Führungsschiene radial kontaktieren kann. Es kann sich eine Linienberührung ergeben. Mit anderen Worten können die Führungsrollen bei der Relativbewegung zwischen der Antriebskette und der Führungsschiene auf einer Führungsfläche der Führungsschiene abwälzen. Dies kann den Verschleiß der Mitnehmereinheit bzw. der Führungsschiene deutlich reduzieren. Je größer der Abstand zwischen den beiden Führungsrollen, desto geringer sind üblicherweise die Kontaktkräfte zwischen den Führungsrollen und der Führungsschiene.

Erfindungsgemäß weist das zumindest eine Mitnehmerelement ferner zumindest einen Innensteg auf, der zwischen dem Mitnahmeausleger und dem Stützausleger angeordnet ist und dazu ausgebildet ist, in Lücken zwischen Reihen des Zugmittels einzugreifen, wobei der zumindest eine Innensteg vorzugsweise dazu ausgebildet ist, zumindest eine mittige Lasche, insbesondere zwei benachbarte Laschen, bei einem mehrreihigen Zugmittel zu ersetzen.

Mehrreihige Zugmittel können beispielsweise als sogenannte Duplexketten oder Triplexketten ausgebildet sein. Derartige Gestaltungen von Zugmitteln können durch das zumindest eine Mitnehmerelement noch weiter verstärkt und entlastet werden, indem mittels dem zumindest einen Innensteg in einen Zwischenraum eingegriffen wird, um das Zugmittel zu verstärken. Der zumindest eine Innensteg kann sich im Wesentlichen parallel zum Mitnahmeausleger bzw. zum Stützausleger ausgehend vom Rücken des Mitnehmerelements aus erstrecken. In einer bevorzugten Ausgestaltung ist eine zumindest zweireihige Antriebskette vorgesehen, bei der "innenliegende" Außenlaschen, bei denen sich die Reihen kontaktieren, durch den Innensteg ersetzt werden. Es versteht sich, dass auch der zumindest eine Innensteg vorzugsweise dazu ausgestaltet ist, mit Verbindungselementen des Zugmittels, vorzugsweise mit zwei benachbarten Verbindungsbolzen, gekoppelt zu werden. Bei einer dreireihigen Gestaltung des Zugmittels (etwa bei einer Triplexkette) können zwei "innenliegende" Paare von Außenlaschen durch entsprechende Innenstege des Mitnehmerelements substituiert werden. Eine derartig versteifte Kette kann noch höhere seitliche Lasten aufnehmen.

In einer weiteren bevorzugten Ausgestaltung weist die Mitnehmereinheit ferner zumindest ein Abstützelement auf, das dem Mitnehmerelement benachbart ist, wobei das zumindest eine Abstützelement einen Rücken sowie einen ersten Halteausleger und einen zweiten Ausleger zur Befestigung am Zugmittel aufweist, die vorzugsweise im montierten Zustand voneinander abgewandten, insbesondere einander gegenüberliegenden, Laschen des Zugmittels benachbart sind und vorzugsweise einander zugewandte Innenflächen aufweisen, wobei der erste Halteausleger mit Verbindungselementen des Zugmittels, insbesondere mit Verbindungsbolzen, koppelbar ist, und wobei der Rücken ferner einen Führungsabschnitt aufweist, der im montierten Zustand vom Zugmittel abgewandt ist und zur seitlichen Führung mit einer Führungsschiene koppelbar ist.

Auf diese Weise kann das Zugmittel noch weiter verstärkt und gegen seitliche Lasten geschützt werden. Beispielhaft kann die Mitnehmereinheit eine Anordnung umfassen, bei der ein Mitnehmerelement zwischen zwei Abstützelementen angeordnet ist. Es ist ferner auch vorstellbar, ein Mitnehmerelement zwischen vier Abstützelementen (zwei auf jeder Seite) anzuordnen. Das zumindest eine Abstützelement kann zum Mitnehmerelement in der Haupterstreckungsrichtung versetzt sein. Das zumindest eine Abstützelement kann grundsätzlich ähnlich dem Mitnehmerelement ausgebildet sein, ohne jedoch mit einem entsprechenden Mitnahmezapfen versehen zu sein. Insbesondere kann der Führungsabschnitt des Abstützelements in einer bevorzugten Weiterbildung analog dem Mitnehmerelement zumindest eine Führungsflanke aufweisen, die an die Führungsschiene angreift, vorzugsweise eine erste Führungsflanke und eine zweite Führungsflanke, die dazu ausgebildet sind, ein Führungsprofil der Führungsschiene seitlich zu umgreifen.

Das zumindest eine Abstützelement kann das Zugmittel klammerartig oder brückenartig umgreifen. Gemeinsam können das zumindest eine Mitnehmerelement und das zumindest eine Abstützelement zumindest in Bereichen, in denen das Zugmittel im Wesentlichen geradlinig (translatorisch) bewegt wird, an eine Führungsschiene angreifen, um die seitliche Führung des Zugmittels weiter zu verbessern.

Gemäß einer Weiterbildung sind das zumindest eine Mitnehmerelement und das zumindest eine Abstützelement in der Haupterstreckungsrichtung voneinander versetzt und derart voneinander beabstandet, dass bei seitlichen Auslenkungen des Zugmittels einander zugewandte Frontalflächen miteinander in Kontakt treten können, insbesondere Frontalflächen der Mitnahmeausleger, der Stützausleger und der Halteausleger. Somit kann die seitliche Führung des Zugmittels noch weiter verbessert werden. Sofern es durch außermittige Krafteinwirkung zu einer übermäßigen Verformung der Kette kommt, etwa zu einem seitlichen Durchbiegen, können das zumindest eine Mitnehmerelement und das zumindest eine Abstützelement als Anschlag fungieren. Sofern die seitliche Durchbiegung ein gewisses Maß überschreitet, können Frontalflächen der benachbarten Elemente einander kontaktieren. Weitere (seitliche) Verformungen können wirksam vermieden werden. Frontalflächen des Mitnehmerelements bzw. des Abstützelements sind insbesondere senkrecht zur Haupterstreckungsrichtung ausgebildet.

Gemäß einer weiteren Ausgestaltung weisen das zumindest eine Mitnehmerelement und das zumindest eine Abstützelement im Bereich ihrer Rücken miteinander korrespondierende Eingriffskonturen auf, insbesondere Vorsprünge und Ausnehmungen, die dazu ausgebildet sind, ineinander einzugreifen. Auf diese Weise kann die Mitnehmereinheit einerseits im Bereich ihrer Führungsflanken mit der Führungsschiene zur seitlichen Führung des Zugmittels zusammenwirken. Das Mitnehmerelement und das Abstützelement können jedoch ferner mittels der Eingriffskonturen miteinander, also ohne eine weitere Komponente, zur seitlichen Führung und Versteifung des Zugmittels zusammenwirken.

Es ist bevorzugt, wenn die miteinander korrespondierenden Eingriffskonturen fingerartig oder kammartig ineinander greifen. Beispielhaft können die mit miteinander korrespondierenden Eingriffskonturen beim Mitnehmerelement und beim Abstützelement als Vorsprünge ausgebildet sein, die Seitenflächen umfassen, die insbesondere bei seitlichen Auslenkungen des Zugmittels miteinander in Kontakt treten können. Auf diese Weise kann auch in Bereichen, in denen keine Überdeckung mit der Führungsschiene gewährleistet ist, eine intrinsische Verstärkung des Zugmittels gewährleistet sein. Dies kann beispielsweise im Bereich von Umlenkungen von Vorteil sein.

In alternativer Ausgestaltung der Mitnehmereinheit weist der Führungsabschnitt des Abstützelements zumindest eine Führungsrolle auf, die an dessen Rücken drehbar aufgenommen ist und dazu ausgebildet ist, an die Führungsschiene anzugreifen. Vorzugweise sind zwei in der Haupterstreckungsrichtung zueinander versetzte Abstützelemente vorgesehen, die bei ihrem jeweiligen Führungsabschnitt jeweils eine Führungsrolle aufweisen, wobei das zumindest eine Mitnehmerelement zwischen den Abstützelementen angeordnet ist. Die Führungsrollen können umfangsseitig in ein nutförmiges Führungsprofil der Führungsschiene eingreifen. Die Führungsrollen können an Bolzen aufgenommen sein, die im Wesentlichen senkrecht zum Rücken der Abstützelemente orientiert sind.

Auch auf diese Weise kann eine verschließarme seitliche Führung der Mitnehmereinheit an der Führungsschiene gewährleistet werden. Die Führungsrollen können im Falle seitlicher Belastungen Führungsflächen der Führungsschiene radial kontaktieren, insbesondere auf diesen abwälzen. Zwischen den Führungsrollen der Abstützelemente kann sich ein hinreichend großer Führungsabstand ergeben, so dass eingeleitete Kräfte und Momente nicht zu übermäßigen Belastungen der Führungspartner führen.

Grundsätzlich ist es vorstellbar, sowohl am Mitnehmerelement als auch an den Abstützelementen Führungsrollen zur seitlichen Führung der Antriebskette vorzusehen. Demgemäß kann sich eine Vielzahl von Kontaktstellen zwischen der Mitnehmereinheit und dem Führungsschiene ergeben. Es ist jedoch auch vorstellbar, am Mitnehmerelement selbst keine Führungsrolle vorzusehen. In einem solchen Fall kann das Mitnehmerelement zwischen zwei Abstützelementen angeordnet sein, die jeweils zumindest eine Führungsrolle aufweisen. Demgemäß kann der Führungsabschnitt für das Mitnehmerelement bei den Abstützelementen ausgebildet sein. Es kann sich bei der Mitnehmereinheit eine mittelbare seitliche Führung des Mitnehmerelements an der Führungsschiene ergeben.

Die Aufgabe der Erfindung wird ferner durch eine Antriebskette nach Anspruch 10, mit zumindest einer Mitnehmereinheit nach einem der vorgenannten Aspekte gelöst, wobei die Antriebskette eine Mehrzahl von Gliedern mit Laschen aufweist, die durch Kettenbolzen miteinander gekoppelt sind, wobei zumindest einige der Kettenbolzen der Antriebskette als Verbindungsbolzen, insbesondere als verlängerte Verbindungsbolzen, ausgestaltet sind und mit dem Mitnahmeausleger und dem Stützausleger eines Mitnehmerelements der Mitnehmereinheit gekoppelt sind, und wobei die Mitnehmereinheit zur Bewegungsmitnahme an der Antriebskette festgelegt ist.

Bei der Antriebskette kann es sich um eine Gelenkkette, insbesondere um eine Rollenkette oder um eine Buchsenkette handeln. Die Antriebskette kann als biegesteife Kette gestaltet sein, insbesondere als gegen seitliche Durchbiegung versteifte Kette. Es versteht sich, dass die Antriebskette prinzipbedingt gelenkig gestaltet ist, also in einer Vorzugsrichtung besonders einfach umlenkbar bzw. verbiegbar ist. Es ist jedoch bevorzugt, wenn die Antriebskette in einer hierzu grundsätzlich senkrechten (seitlichen) Richtung biegesteif ist. Auf diese Weise kann die Antriebskette besonders effektiv zur Aufnahme außermittiger Lasten oder Kräfte verwendet werden.

Die Antriebskette kann grundsätzlich als Endloskette gestaltet sein, also als geschlossen umlaufende Kette. Es ist jedoch auch vorstellbar, die Antriebskette als offene Kette zu gestalten. Die Antriebskette kann grundsätzlich als Zugkette gestaltet sein. Es ist jedoch auch vorstellbar, die Antriebskette als Schubkette auszuführen.

Mitnehmerelemente der Antriebskette, insbesondere Bolzen der Antriebskette, können entsprechende Innenlaschen und Außenlaschen miteinander verbinden, um Glieder der Kette zu bilden. Zumindest einige der Außenlaschen der Antriebskette können beispielsweise durch das zumindest eine Mitnehmerelement oder das zumindest einen Abstützelement der Mitnehmereinheit ersetzt werden, um eine biegesteife Antriebskette zu bilden. Es ist jedoch auch vorstellbar, zumindest eines des Mitnehmerelements oder des Abstützelements "von außen" auf die (äußeren) Außenlaschen der Antriebskette anzukoppeln, also die Außenlaschen nicht zu ersetzen. In einem solchen Fall ist es von Vorteil, verlängerte Verbindungsbolzen zu verwenden, die seitlich über die Außenlaschen der Antriebskette hervorstehen. Auf diese Weise kann hinreichende Überdeckung mit dem Mitnehmerelement bzw. dem Abstützelement gewährleistet werden. Das Mitnehmerelement bzw. das Abstützelement können grundsätzlich formschlüssig mit den entsprechenden Gliedern der Antriebskette gekoppelt sein. Eine zumindest teilweise kraftschlüssige Kopplung ist alternativ oder zusätzlich denkbar.

Gemäß einer weiteren Ausgestaltung der Antriebskette weist die zumindest eine Mitnehmereinheit ferner zumindest ein dem Mitnehmerelement benachbartes Abstützelement auf, vorzugsweise zwei dem Mitnehmerelement benachbarte Abstützelemente, wobei das zumindest eine Mitnehmerelement und das zumindest eine Abstützelement an benachbarten Gliedern der Antriebskette festgelegt sind. Gemäß einigen Ausgestaltungen kann die Antriebskette verlängerte Verbindungsbolzen aufweisen, die mit dem ersten Halteausleger und dem zweiten Halteausleger des Abstützelements gekoppelt sind.

Gemäß einer weiteren Ausgestaltung ist die zumindest eine Mitnehmereinheit dazu ausgebildet, zur seitlichen Führung der Antriebskette an eine Führungsschiene anzugreifen, wobei die Antriebskette ferner Gleitrollen aufweist, die zwischen Laschen der Antriebskette an den Kettenbolzen aufgenommen sind, wobei die Glieder der Antriebskette dazu ausgebildet sind, zur Führung der Antriebskette an eine Gleitschiene anzugreifen, die vorzugsweise eine Gleitbahn für die Gleitrollen aufweist. Auf diese Weise können die Gleitschiene und die Führungsschiene zumindest abschnittsweise eine Führungsstruktur für die Antriebskette bilden. Im Bereich der Führungsstruktur können die Gleitschiene und die Führungsschiene einander gegenüberliegend angeordnet sein. Die durch die Gleitschiene und die Führungsschiene gebildete Führungsstruktur ist insbesondere als geradlinige Führungsstruktur mit zueinander parallelen Gleitflächen bzw. Führungsflächen ausgebildet.

Gemäß einer weiteren Ausgestaltung ist die Antriebskette als mehrreihige Kette ausgebildet, insbesondere als Duplexkette oder Triplexkette, wobei das zumindest eine Mitnehmerelement zumindest einen Innensteg aufweist, der im montierten Zustand in Lücken zwischen parallelen Reihen der Antriebskette eingreift. Die Lücken zwischen den Reihen der Antriebskette können insbesondere durch das Auslassen von (mittigen) Außenlaschen der Antriebskette gebildet sein.

Gemäß einer weiteren Ausgestaltung der Antriebskette ragt der Mitnahmezapfen des zumindest einen Mitnehmerelements seitlich um ein Versatzmaß L über seitliche Laschen der Antriebskette hinaus, das mit einem Maß p für die Kettenteilung, die durch den Abstand zweier benachbarter Kettenbolzen oder Verbindungsbolzen definiert ist, ein Verhältnis L/p von mindestens 2:1, vorzugsweise mindestens 3:1, weiter bevorzugt mindestens 4:1 aufweist. Die Maßnahmen zur (seitlichen) Versteifung der Antriebskette erlauben besonders lange oder überlange seitliche Mitnahmezapfen. Dies kann bei besonderen baulichen Randbedingungen von wesentlichem Vorteil sein.

Gemäß einer weiteren Ausgestaltung weist das Versatzmaß L mit einer Gesamtbreite B der Antriebskette ein Verhältnis L/B von mindestens 0,8:1, vorzugsweise mindestens 1,0:1, weiter bevorzugt mindestens 1,2:1 auf. Es kann ferner von Vorteil sein, wenn das Versatzmaß L mit einer Breite b einer Reihe der Antriebskette ein Verhältnis L/b von mindestens 2,4:1, vorzugsweise mindestens 3,0:1, weiter bevorzugt mindestens 3,6:1 aufweist. Die genannten Bereiche können realisiert werden, ohne dass es zu übermäßigen seitlichen Belastungen der Antriebskette kommt. Somit sind eine hohe Lebensdauer, ein geringer Verschleiß und eine hohe Funktionssicherheit der Antriebskette gewährleistet.

Das Lagersystem betreffend wird die Aufgabe der Erfindung durch ein Lagersystem nach Anspruch 14, insbesondere einen Lagerlift, gelöst, wobei das Lagersystem Folgendes aufweist:
- ein Gestell mit zumindest einem Regalabschnitt, wobei der zumindest eine Regalabschnitt eine Mehrzahl von Aufnahmeelementen für Lagergutträger, insbesondere für Tablare, aufweist,
- zumindest einen Handhabungsabschnitt mit einer Transferöffnung, wobei der zumindest eine Handhabungsabschnitt insbesondere in zumindest einen Regalabschnitt eingebracht ist,
- einen Hubantrieb, insbesondere einen Vertikalförderer, zum selektiven Anheben oder Absenken der Lagergutträger, und
- einen Auszug, insbesondere einen durch den Hubantrieb bewegbaren Auszug, der zumindest einen Kettentrieb mit einer Antriebskette nach einem der vorgenannten Aspekte aufweist, wobei der zumindest eine Kettentrieb dazu ausgestaltet ist, Lagergutträger zwischen den Regalabschnitten, dem zumindest einen Handhabungsabschnitt und dem Hubantrieb umzulagern.

Auf diese Weise kann das Einlagern oder Auslagern von Lagergutträgern und durch diese aufzunehmenden Artikeln besonders sicher erfolgen, wobei übermäßige seitliche Belastungen der Antriebskette vermieden werden können. Gemäß einer Weiterbildung weist das Lagersystem ferner ein Schutztor auf, das eine Transferöffnung, insbesondere eine innere Transferöffnung, des Handhabungsabschnitts verschließen kann, wobei das Schutztor vorzugsweise dazu ausgestaltet ist, die Transferöffnung selektiv zu verschließen, wenn ein Lagergutträger vor der Transferöffnung im Handhabungsabschnitt positioniert ist.

Lagersysteme, insbesondere Lagerlifte mit äußeren, also vom Bediener aus vor dem Handhabungsabschnitt gelegenen Schutztoren, sind bekannt. Üblicherweise sind jedoch die Schutztore dazu eingerichtet, sämtlichen Zugriff auf das Lagersystem zu unterbinden. Während des Betriebs, also wenn etwa auf durch einen Lagergutträger aufgenommene Artikel zurückgegriffen werden soll, sind derartige Schutztore jedoch regelmäßig geöffnet. Auf diese Weise kann ein Bediener grundsätzlich durch die Transferöffnung hindurch in das Innere des Lagersystems greifen. Es wird daher vorgeschlagen, zur weiteren Erhöhung der Bedienersicherheit die Transferöffnung nur dann freizugeben, wenn tatsächlich ein Transfer des Lagergutträgers erfolgt. Nach Möglichkeit soll die Transöffnung ansonsten verschlossen werden.

Ein Schutztor, das den Handhabungsabschnitt zugänglich macht und gleichzeitig die (innere) Transferöffnung sicher verschließt, muss jedoch im Innenraum des Lagersystems, insbesondere des Lagerlifts, angeordnet sein. Dies kann besondere bauliche oder konstruktive Maßnahmen erforderlich machen. Diese Maßnahmen können zumindest bei einigen Ausgestaltungen des Schutztores dazu führen, dass (seitliche) Mitnahmezapfen des zumindest einen Kettentriebs zur Einlagerung oder Auslagerung der Lagergutträger besonders lang gestaltet sein müssen. Durch den sich ergebenden Hebelarm können grundsätzlich hohe (seitliche) Lasten bzw. Momente auf die Antriebskette einwirken. Dies ist insbesondere dann der Fall, wenn die zu bewegenden Lagergutträger im Wesentlichen gleitend bewegt werden, wodurch nicht zu vernachlässigende Reibkräfte entstehen können. Die Mitnehmereinheit nach einem der vorgenannten Aspekte kann dazu beitragen, auch bei derartigen Randbedingungen die Funktionsfähigkeit und Langlebigkeit der Antriebskette zu gewährleisten.

Hinsichtlich des Layouts des Lagersystems, insbesondere in Bezug auf die Anordnung des Handhabungsabschnittes mit der Transferöffnung, sind alternative Ausgestaltungen denkbar. So ist es insbesondere bei einem Lagersystem, das lediglich einen Regalabschnitt aufweist, denkbar, den Handhabungsabschnitt mit der Transferöffnung von jenem Regalabschnitt beabstandet anzuordnen. Demgemäß kann etwa der Hubantrieb zwischen dem einen Regalabschnitt und dem Handhabungsabschnitt angeordnet sein. Es ist grundsätzlich auch vorstellbar, den Handhabungsabschnitt an einem (vertikalen) Ende des Hubantriebs vorzusehen. Beispielhaft kann der Handhabungsabschnitt am oberen Ende eines Schachtes angeordnet sein, in dem der Hubantrieb angeordnet ist. Demgemäß kann der Handhabungsabschnitt von dem zumindest einen Regalabschnitt getrennt angeordnet sein. So können etwa der Hubantrieb und der Handhabungsabschnitt mit der Transferöffnung zwischen zwei voneinander versetzten Regalabschnitten angeordnet sein.

Gemäß einer weiteren Ausgestaltung des Lagersystems weist das Schutztor seitliche abgewinkelte Aufnahmelaschen auf, die insbesondere an Innenwänden eines Gehäuses des Lagersystems aufgenommen sind. Eine solche Gestaltung kann die Bedienersicherheit weiter erhöhen. Bewegliche Teile des Schutztores, beispielsweise Gelenke, Scharniere oder Ähnliches, sind (aus Sicht des Bedieners) weitgehend verdeckt bzw. berührsicher angeordnet. Sofern jedoch ein Schutztor an Innenwänden im Inneren des Lagersystems angeschlagen bzw. geführt ist, kann sich die erforderliche (seitliche) Länge des Mitnahmezapfens weiter erhöhen. Das Schutztor kann beispielsweise einen im Wesentlichen U-förmigen Querschnitt aufweisen, wobei Schenkel des U durch die seitlichen Laschen oder Aufnahmelaschen gebildet sind.

Diese Gestaltung folgt der Prämisse, nach Möglichkeit keine mechanischen, beweglichen Antriebsteile in für den Bediener zugänglichen Bereichen des Handhabungsabschnitts vorzusehen. Im Handhabungsabschnitt selbst ist nach Möglichkeit lediglich Platz für den zu präsentierenden Lagergutträger vorgesehen. Das Schutztor kann grundsätzlich als vertikal schließendes Schutztor ausgestaltet sein. Das Schutztor kann beispielsweise klappenförmig, ferner jedoch auch segmentartig (etwa als Rolltor) ausgestaltet sein.

Es versteht sich, dass eine Antriebskette nach einem der vorgenannten Aspekte vorteilhaft auch für andere Anwendungen auf dem Gebiet der Logistik, insbesondere bei Lagersystemen, wie etwa Lagerliften, Verschieberegalen, Paternosterregalen, Umlaufregalen oder dergleichen eingesetzt werden kann.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

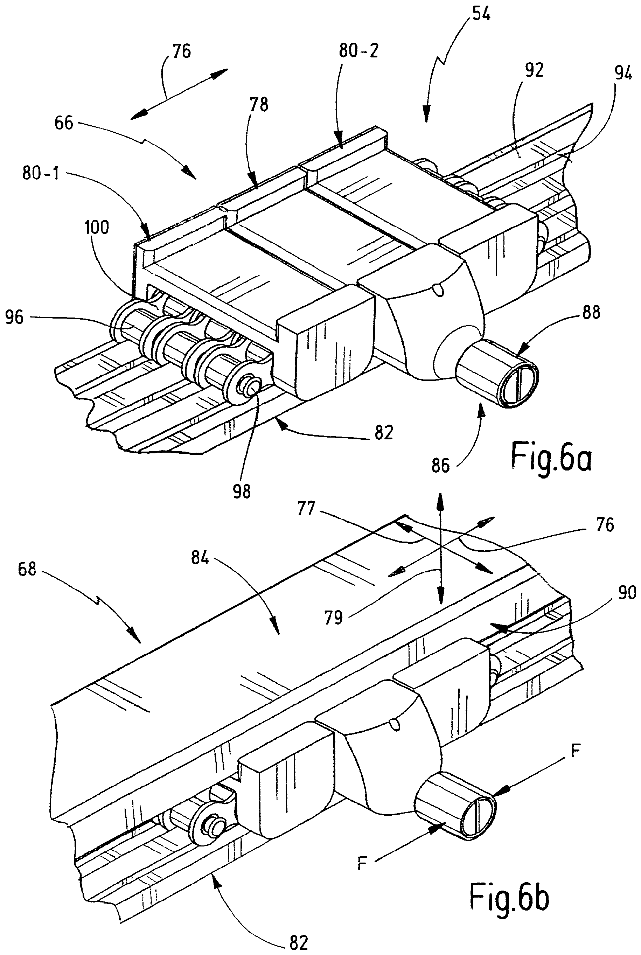

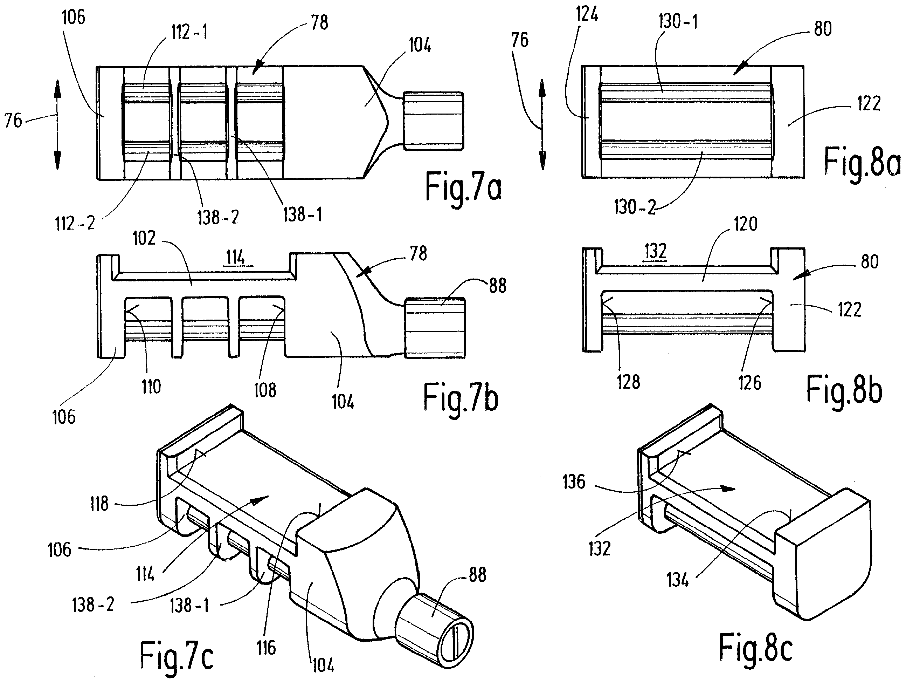

Weitere Vorteile und Merkmale der Erfindung ergeben sich aus der nachfolgenden Beschreibung mehrerer bevorzugter Ausführungsbeispiele unter Bezugnahme auf die Zeichnungen. Es zeigen:
Figur 1 eine schematische, stark vereinfachte perspektivische Ansicht eines Lagersystems in Form eines Lagerlifts;
Figur 2 eine schematische, stark vereinfachte Seitenansicht einer Ausgestaltung eines Auszugs für ein Lagersystem, der einer Hubeinrichtung des Lagersystems zugeordnet ist;
Figur 3 eine erste stark vereinfachte, geschnittene Teilansicht eines Handhabungsabschnitts eines Lagersystems in Draufsicht;
Figur 4 eine mit der Ansicht gemäß Fig. 3 korrespondierende Darstellung eines gegenüber der Fig. 3 abgewandelten Lagersystems;
Figur 5 eine weitere mit der Ansicht gemäß Fig. 3 korrespondierende Darstellung noch eines weiteren abgewandelten Lagersystems;
Figuren 6a und 6b
   perspektivische Ansichten einer Ausgestaltung einer Mitnehmereinheit für eine Antriebskette, wobei die Antriebskette mit einer Gleitschiene (Fig. 6a) und mit einer Führungsschiene (Fig. 6b) koppelbar ist;
Figuren 7a, 7b und 7c
   eine erste Ansicht (Fig. 7a), eine zur ersten Ansicht senkrecht orientierte zweite Ansicht (Fig. 7b) sowie eine perspektivische Ansicht (Fig. 7c) einer beispielhaften Ausgestaltung eines Mitnehmerelements;
Figuren 8a, 8b und 8c
   eine erste Ansicht (Fig. 8a), eine zur ersten Ansicht senkrecht orientierte zweite Ansicht (Fig. 8b) und eine perspektivische Ansicht (Fig. 8c) einer beispielhaften Ausgestaltung eines Abstützelements;

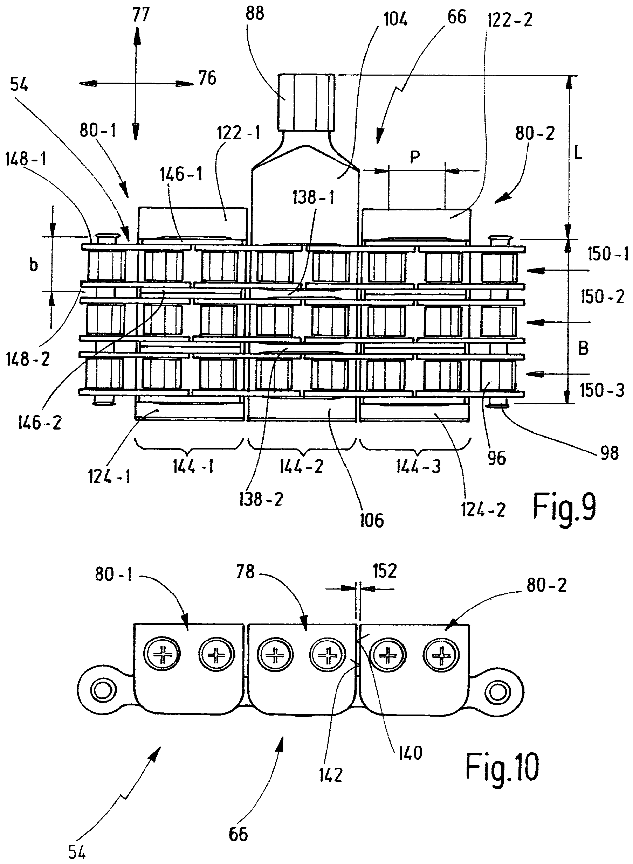

Figur 9 eine erste Ansicht (etwa von unten) einer Gestaltung einer Antriebskette (nur teilweise dargestellt) mit einer Mitnehmereinheit;
Figur 10 eine Seitenansicht der Antriebskette mit der Mitnehmereinheit gemäß Fig. 9;

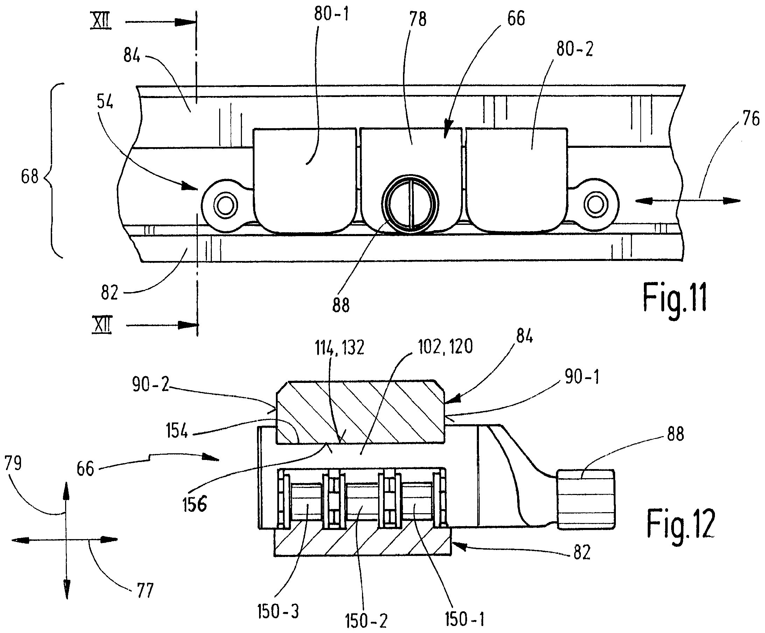

Figur 11 eine mit Fig. 10 korrespondierende Seitenansicht der Antriebskette, wobei die Antriebskette an einer Führungsstruktur geführt wird;
Figur 12 eine weitere Ansicht der Darstellung gemäß Fig. 11 in einer Schnittdarstellung entlang der Linie XII-XII gemäß Fig. 11;

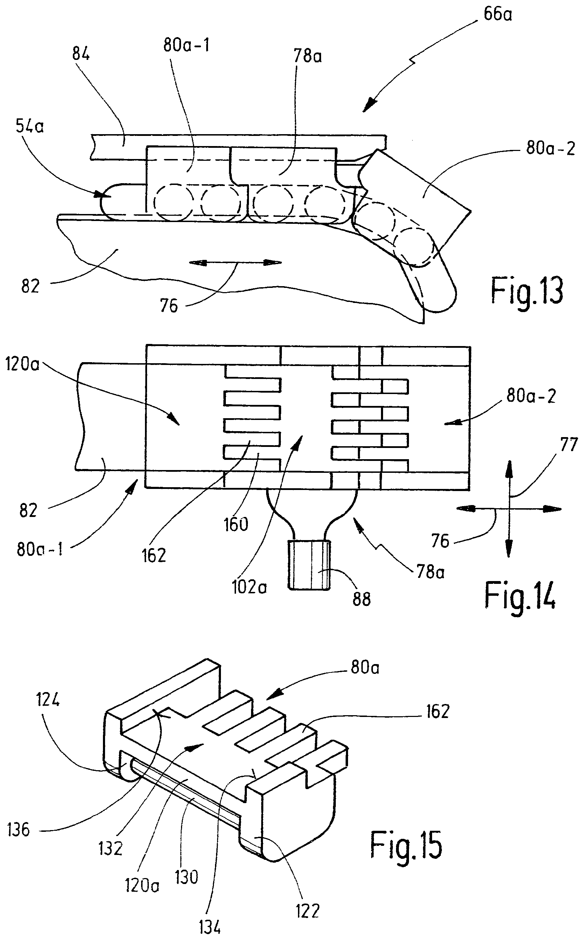

Figur 13 eine erste schematische Seitenansicht einer alternativen nicht erfindungsgemäßen Ausgestaltung einer Antriebskette mit einer Mitnehmereinheit;
Figur 14 eine weitere vereinfachte Darstellung der Mitnehmereinheit gemäß Fig. 13 in zur Fig. 13 senkrechter Orientierung;
Figur 15 eine perspektivische Ansicht eines Abstützelements, das insbesondere bei der anhand der Fig. 13 und 14 veranschaulichten Mitnehmereinheit verwendbar ist;

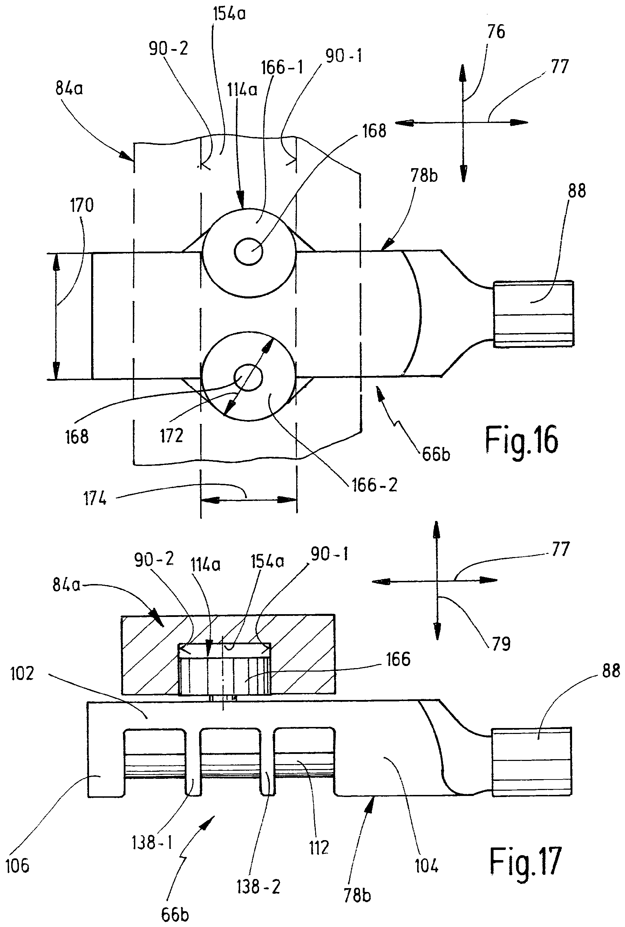

Figur 16 eine erste Ansicht einer abgewandelten Ausführungsform eines nicht erfindungsgemäßen Mitnehmerelements, das einen Führungsschnitt mit Rollen aufweist und mit einem Führungsprofil einer Führungsschiene gekoppelt ist;
Figur 17 eine zur Fig. 16 senkrecht orientierte Ansicht des Mitnehmerelements gemäß Fig. 16;

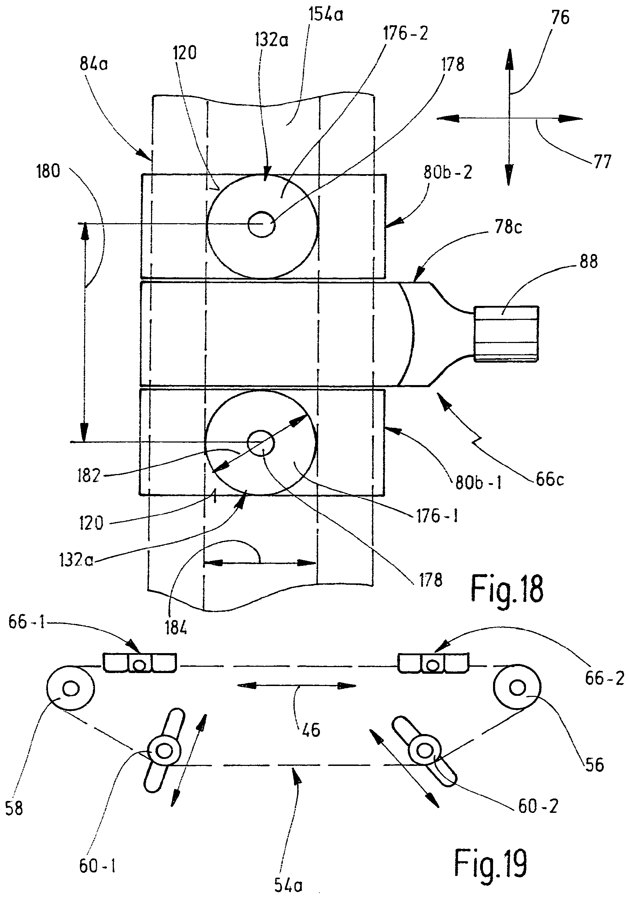

Figur 18 eine weitere vereinfachte Ansicht einer Ausgestaltung einer Mitnehmereinheit, die einen Führungsabschnitt mit Rollen aufweist, um die Mitnehmereinheit an einer Führungsschiene zu führen; und

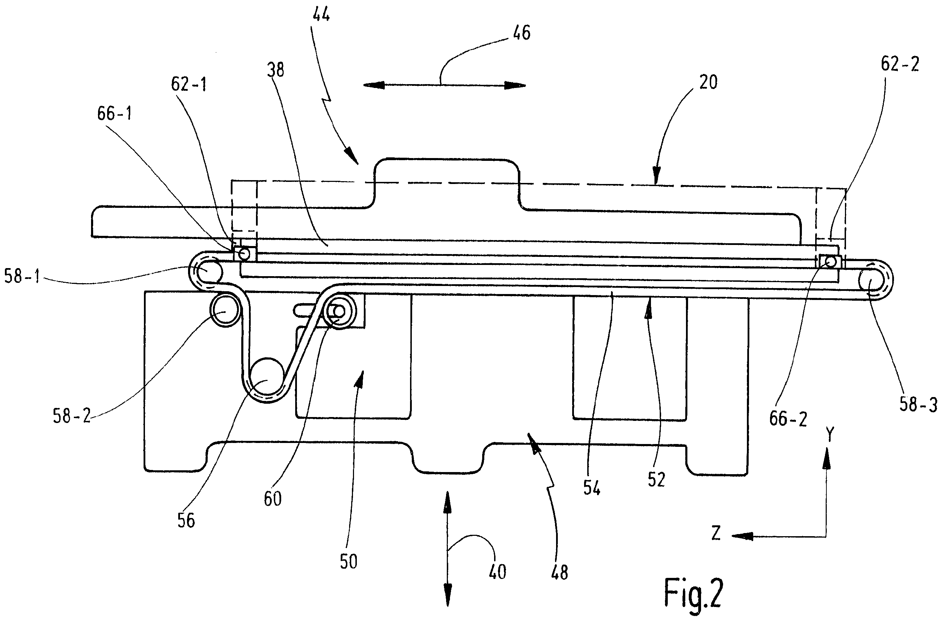

Figur 19 eine stark vereinfachte Darstellung einer gegenüber der Gestaltung gemäß Fig. 2 abgewandelten Ausführungsform einer Antriebskette, die mit Mitnehmereinheiten gekoppelt ist.

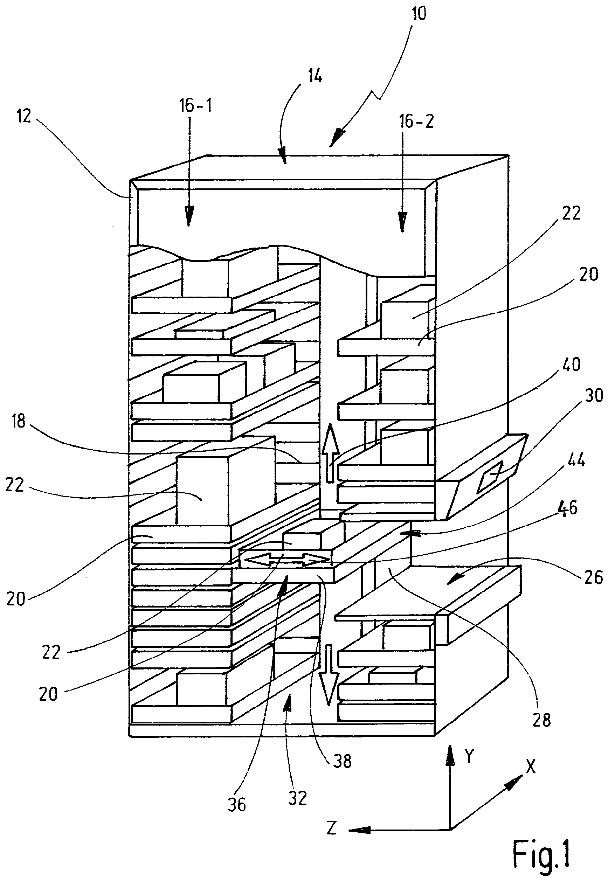

Fig. 1 zeigt eine schematische perspektivische, teilweise ausgebrochen gezeigte Darstellung eines Lagersystems, das beispielhaft als Lagerlift ausgebildet ist und insgesamt mit 10 bezeichnet wird.

In Fig. 1 ist ferner ein Koordinatensystem dargestellt, das grundsätzlich aus drei Achsen X, Y und Z besteht. Die Beschreibung der bereits genannten und noch zu erläuternden Figuren hält sich bei der Wortwahl der Orientierungen der Koordinatensysteme grundsätzlich an die in der (Intra-)Logistik übliche Bezeichnung, so dass die Längsrichtung mit X, die Tiefe oder Tiefenerstreckung mit Z und die (vertikale) Höhe mit Y bezeichnet werden können.

Des Weiteren werden gleiche Teile mit gleichen Merkmalen mit den gleichen oder ähnlichen Bezugsziffern versehen. Die in der Beschreibung enthaltenen Offenbarungen sind sinngemäß auf gleiche Teile und Merkmale mit denselben Bezeichnungen übertragbar. Lage- und Orientierungsangaben (wie zum Beispiel Anführungszeichen oben, Anführungszeichen unten, "seitlich", "längs", "quer", "horizontal", "vertikal" oder dergleichen) sind auf die unmittelbar beschriebene Figur bezogen. Es versteht sich jedoch, dass diese Angaben bei einer Änderung der Lage oder Orientierung, etwa in anderen Figuren, sinngemäß auf die neue Lage bzw. Orientierung übertragen werden können.

Der Lagerlift 10 wird hier stellvertretend für verschiedene Arten dynamische Lagersysteme genannt. Dynamische Lagersysteme sind üblicherweise dazu ausgestaltet, Artikel gemäß dem "Ware-zum-Mann" Prinzip einzulagern und bereitstellen zu können. Zu diesem Zweck weisen Lagersysteme verschiedene Antriebe auf, um Lagergüter (auch: Artikel) aufnehmende Ladehilfsmittel bewegen zu können. Zumindest einige dieser Antriebe können Zugmitteltriebe, insbesondere Kettentriebe, umfassen.

Der Lagerlift 10 weist beispielhaft ein Gestell 12 sowie ein Gehäuse 14 auf, das einen zur Lagerung zur Verfügung stehenden Raum umschließt. Der Lagerlift 10 weist zumindest einen Regalabschnitt 16 auf. Beispielhaft weist der anhand der Fig. 1 veranschaulichte Lagerlift einen ersten Regalabschnitt 16-1 und einen zweiten Regalabschnitt 16-2 auf. Jeder der Regalabschnitte 16 kann eine Mehrzahl von Aufnahmeelementen 18 aufweisen, die insbesondere vertikal voneinander beabstandet und zur Aufnahme von Lagergutträgern 20 ausgebildet sind. Bei den Aufnahmeelementen 18 kann es sich etwa um Aufnahmewinkel, Aufnahmeschienen, Aufnahmenuten oder ähnliche Halteelemente handeln. Die Lagergutträger 20 können insbesondere als Tablare ausgebildet sein. Tablare sind üblicherweise spezifisch an die Gestaltung des aktuellen Lagersystems oder Lagerlifts 10 angepasste Ladehilfsmittel. Tablare können dazu ausgebildet sein, Ladegüter direkt aufzunehmen. Tablare können jedoch auch dazu ausgebildet sein, weitere Ladehilfsmittel, etwa Kisten, Kästen, oder dergleichen aufzunehmen, in denen Ladegüter lagerbar sind.

In den Lagergutträgern 20 des Lagerlifts 10 können Artikel 22 aufgenommen sein. Die Lagergutträger 20 können in geeigneter Weise an den Aufnahmeelementen 18 aufgenommen werden, etwa unter Beachtung einer aktuellen Höhe von Artikeln 22. Auf diese Weise können die Lagergutträger 20 derart angeordnet werden, dass der vorhandene Stauraum in den Regalabschnitten 16 bestmöglich genutzt wird.

Der Lagerlift 10 weist ferner zumindest einen Handhabungsabschnitt 26 auf, der beispielsweise für einen Bediener zugänglich ist. Mit anderen Worten kann der Handhabungsabschnitt 26 eine "Schnittstelle" des Lagersystems mit der Umgebung darstellen. Der Handhabungsabschnitt 26 kann in zumindest einen der Regalabschnitte 16-1, 16-2 eingebracht sein. Mit anderen Worten kann der Handhabungsabschnitt 26 beispielhaft eine Grundfläche aufweisen, die an eine Grundfläche der Lagergutträger 20 in den Regalabschnitten 16 angepasst ist. Auf diese Weise kann sich beim Lagerlift 10 eine integrierte kompakte Gestaltung ergeben. Bezogen auf eine gegebene Grundfläche kann ein größtmöglicher Raum zur Lagerung bereitgestellt werden.

Der Handhabungsabschnitt 26 kann einem Bediener erlauben, Artikel 22 zu entnehmen oder zur Einlagerung in den Lagerlift 10 aufzugeben. Es versteht sich, dass Gestaltungen des Lagerlifts 10 denkbar sind, bei denen der Handhabungsabschnitt 26 mit (weiteren) automatisierten Fördermitteln gekoppelt ist. Der Handhabungsabschnitt 26 kann an seinem inneren Ende eine Transferöffnung 28 bereitstellen, durch die Lagergutträger 20 mit auf diesen aufgenommenen Artikeln 22 aus einem Innenraum des Lagerlifts 10 an den Handhabungsabschnitt 26 übergeben werden können. Beim Handhabungsabschnitt 26 können ferner Bedienelemente, Steuerungselemente, Anzeigeelemente oder Ähnliches vorgesehen sein (Bezugszeichen 30 in Fig. 1). Es sind Gestaltungen von Lagerliften 10 denkbar, bei denen eine Mehrzahl von Handhabungsabschnitten 26 vorgesehen ist. Beispielhaft kann jedem Regalabschnitt 16-1, 16-2 ein Handhabungsabschnitt 26 zugeordnet sein.

Die Regalabschnitte 16-1, 16-2 sind in der Tiefenrichtung Z voneinander versetzt. Zwischen den Regalabschnitten 16-1 und 16-2 ist eine Hubgasse 32 vorgesehen, die in geeigneter Weise an Abmessungen der Lagergutträger 20 angepasst ist. In der Hubgasse 32 können die Lagergutträger durch einen Hubantrieb 36 verfahren werden, insbesondere vertikal verfahren werden. Der Hubantrieb 36 ist in Fig. 1 lediglich symbolhaft angedeutet. Der Hubantrieb 36 kann zumindest eine Hubaufnahme 38 aufweisen, die zur Aufnahme von Lagergutträgern 20 ausgestaltet ist. Auf diese Weise können die Artikel 22 mitsamt den Lagergutträgern 20 zwischen den Regalabschnitten 16-1 und 16-2 sowie der Hubaufnahme 38 des Hubantriebs 36 umgesetzt werden. Eine Hubrichtung wird in Fig. 1 durch einen mit 40 bezeichneten Pfeil veranschaulicht.

Zum Transfer der Lagergutträger 20 zwischen den Regalabschnitten 16-1, 16-2 und dem Hubantrieb 36 sowie zwischen dem Hubantrieb 36 und dem Handhabungsabschnitt 26 ist ferner ein Auszugsantrieb oder Auszug 44 vorgesehen (in Fig. 1 nur schematisch angedeutet), der auf dem Hubantrieb 36 bzw. dessen Hubaufnahme 38 montiert ist. Der Auszug 44 kann auch als Extraktor bezeichnet werden. Der Auszug 44 kann insbesondere dazu ausgestaltet sein, Lagergutträger 20 mit ggf. von diesen aufgenommenen Artikeln 22 in der Tiefenrichtung (Z-Richtung) zu verfahren bzw. zu verschieben. Eine entsprechende Verfahrrichtung oder Auszugsrichtung wird in Fig. 1 durch einen mit 46 bezeichneten Pfeil veranschaulicht. Der Hubantrieb 36 und der Extraktor oder Auszug 44 können in geeigneter Weise zusammenwirken, um Artikel 22 in gewünschter Weise einzulagern, umzulagern und/oder auszulagern.

Es versteht sich, dass andere Gestaltungen und Layouts des Lagerlifts 10 grundsätzlich denkbar sind. So ist es beispielsweise vorstellbar, dass nicht nur in der Tiefenrichtung (Z-Richtung) mehrere voneinander versetzte Regalabschnitte 16-1, 16-2 vorgesehen sind. Es sind Gestaltungen denkbar, bei denen Regalabschnitte 16 auch in der Längsrichtung (X-Richtung) voneinander versetzt angeordnet sein können. Demgemäß sind auch Gestaltungen vorstellbar, bei denen ein Längsantrieb zur Längsbewegung (X-Richtung) der Lagergutträger 20 vorgesehen ist.

Fig. 2 zeigt eine stark vereinfachte schematische Seitenansicht eines Extraktors oder Auszugs 44 zum Transfer von Lagergutträgern 20 in einer Auszugsrichtung 46. Es versteht sich, dass der Auszug 44 grundsätzlich im Wesentlichen symmetrisch zu einer Ebene gestaltet sein kann, die durch die Achsen Y und Z definiert ist. Mit anderen Worten kann der Auszug 44 dazu ausgestaltet sein, an zwei in der Längsrichtung X voneinander beabstandeten Enden des Lagergutträgers 20 anzugreifen, um diesen in der Auszugsrichtung 46 zu verfahren. Demgemäß können die in der Fig. 2 gezeigten Komponenten des Auszugs 44 doppelt vorgesehen sein.

Der Auszug 44 weist zumindest einen Zugmitteltrieb 50 auf, der insbesondere als Kettentrieb ausgestaltet sein kann. Der Kettentrieb 50 ist mit zumindest einem Zugmittel 52 versehen, insbesondere mit einer Antriebskette 54. Das Zugmittel 52 kann beispielhaft ein umlaufendes Zugmittel sein. Das Zugmittel 52 kann durch zumindest ein Antriebsrad 56, insbesondere zumindest ein Kettenrad, antreibbar sein. Es können ferner Räder oder Rollen zur Umlenkung vorgesehen sein, vgl. Bezugszeichen 58-1, 58-2 und 58-3 in Fig. 2. Ferner kann zumindest ein Spannrad oder ein Spannrolle 60 vorgesehen sein, um das Zugmittel 52 in gewünschter Weise vorzuspannen. Das Antriebsrad 56 kann in geeigneter Weise mit einem Antriebsmotor oder Ähnlichem gekoppelt sein.

Der Auszug 44 kann ferner einen Portaltisch 48 umfassen, der dem Hubantrieb 36 (Fig.1) zugeordnet ist. Am Portaltisch 48 kann die Hubaufnahme 38 zur Aufnahme des Lagergutträgers 20 aufgenommen sein. Mit anderen Worten kann der Portaltisch 48 durch den Hubantrieb 36 (vertikal, vgl. Bezugszeichen 40) verfahren werden, wodurch auch der Auszug 44 angehoben oder gesenkt wird. Auf diese Weise kann der Auszug 44 auf eine gewünschte Höhenposition im Lagerlift 10 bewegt werden. Der Lagergutträger 20 kann zumindest eine Mitnahmeausnehmung 62, vorzugsweise zumindest zwei in der Tiefenrichtung Z voneinander beabstandete Mitnahmeausnehmungen 62-1, 62-2 aufweisen, in die der Kettentrieb 50 zur Mitnahme des Lagergutträgers 20 eingreifen kann. Zu diesem Zweck kann der Kettentrieb 50 beim Zugmittel 52 zumindest eine Mitnehmereinheit 66 aufweisen. Beispielhaft können eine erste Mitnehmereinheit 66-1 und eine zweite Mitnehmereinheit 66-2 vorgesehen sein, die dazu ausgebildet sind, mit der ersten Mitnahmeausnehmung 62-1 und der zweiten Mitnahmeausnehmung 62-2 zusammenzuwirken.

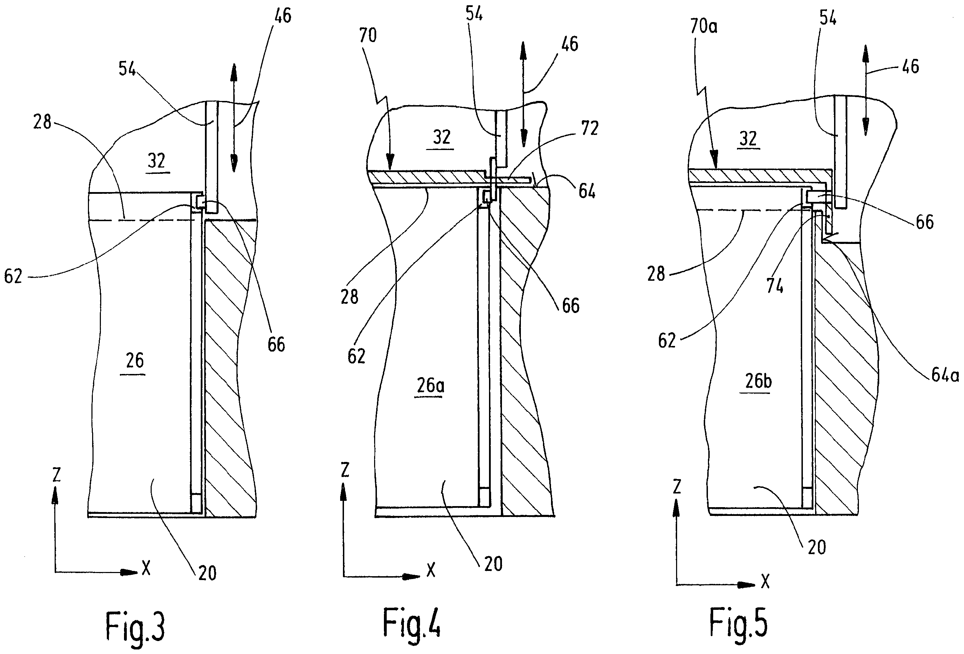

Fig. 3, Fig. 4 und Fig. 5 veranschaulichen beispielhafte Gestaltungen des Handhabungsabschnitts 26. Fig. 3 veranschaulicht eine Ausführungsform, bei der die Transferöffnung 28 beim Handhabungsabschnitt 26 nicht gesondert verschließbar ist. Derartige Gestaltungen sind grundsätzlich vorstellbar. Es ist jedoch eine relativ einfache Zugänglichkeit des Innenraums des Lagerlifts 10, insbesondere der Hubgasse 32 und darin verbauter Komponenten, gegeben. Die in der Fig. 3 gezeigte Draufsicht veranschaulicht ferner, dass die Mitnehmereinheit 66 der Antriebskette 54 (in den Fig. 3, 4 und 5 nur vereinfacht dargestellt) in eine Mitnahmeausnehmung 62 beim Lagergutträger 20 eingreifen kann, um diesen in der Auszugsrichtung 46 zu verfahren, insbesondere zu verschieben. Es ist generell bevorzugt, wenn Komponenten des Auszugs oder Extraktors 44 möglichst vollständig und möglichst unzugänglich im Innenraum, insbesondere in der Hubgasse 32, des Lagerlifts 10 aufgenommen sind. Dies kann bei der Gestaltung gemäß Fig. 3 nicht vollständig gewährleistet werden, da die Transferöffnung 28 generell unverschlossen ist.

Fig. 4 und Fig. 5 erläutern schematisch andere Gestaltungen von Handhabungsabschnitten 26a, 26b, die verschließbare (innere) Transferöffnungen 28 aufweisen. Es ist bevorzugt, wenn die Transferöffnung nur während des tatsächlichen Transfers der Lagergutträger 20 kurzzeitig geöffnet wird. Bei den Gestaltungen gemäß der Fig. 4 und 5 kann die Transferöffnung auch dann, wenn der Lagergutträger 20 in den Handhabungsabschnitten 26a, 26b bereitgestellt wird, geschlossen werden. Dies kann zur Erhöhung der Bedienersicherheit und zur Vermeidung von Fehlfunktionen beitragen.

Zu diesem Zweck können Tore 70, 70a vorgesehen sein, die etwa als Schwenktore, Gleittore, Segmenttore oder Gliedertore gestaltet sein können. Üblicherweise sind die Tore 70, 70a in der Y-Richtung (Fig. 1) verschließbar. Es ist ferner bevorzugt, wenn Führungselemente, Aufnahmeelemente oder allgemein ein Mechanismus für die Schutztore 70, 70a nicht in einem zugänglichen Bereich der Handhabungsabschnitte 26a, 26b angeordnet sind. Zu diesem Zweck ist es ferner bevorzugt, die Tore 70, 70a mit Aufnahmeprofilen oder Aufnahmelaschen 72, 74 zu versehen, die (aus Sicht des Bedieners) innen beim Lagerlift 10 angeschlagen sind. Beispielhaft weist das in Fig. 4 schematisch dargestellte Schutztor 70 seitliche Aufnahmelaschen 72 auf, die sich im Wesentlichen parallel zur Grundfläche des Schutztores 70, also etwa parallel zu einer Achse XY erstrecken. Die Aufnahmelaschen 72 können an einer Innenwand 64 des Lagerlifts 10 aufgenommen oder angeschlagen sein, die ebenso im Wesentlichen parallel zur Ebene XY gestaltet sein kann.

Fig. 4 veranschaulicht eine konstruktive Herausforderung, die diese Gestaltung mit sich bringt. Der Auszug 44 mit der Antriebskette 54 muss gewissermaßen durch das Schutztor 70 "hindurch" verfahrbar sein (wenn das Schutztor 70 geöffnet ist), um den Lagergutträger in den Handhabungsabschnitt 26a einbringen zu können. Sofern ferner die Zugänglichkeit der Antriebskette 54 möglichst gänzlich unterbunden werden soll, können aufwändige Gestaltungen der Mitnehmereinheit 66 erforderlich sein. Gemäß Fig. 4 kann die Mitnehmereinheit 66 in einem solchen Fall etwa an einem Ausleger aufgenommen sein, der als "Verlängerung" für die Mitnehmereinheit 66 fungieren kann.

Die Gestaltung gemäß Fig. 5 verfolgt einen anderen Ansatz. Das Schutztor 70a weist abgewinkelte Aufnahmelaschen 74 auf, die etwa rechtwinklig zu einer Grundfläche des Schutztors 70a gestaltet sein können. Mit anderen Worten können sich die Aufnahmelaschen 74 im Wesentlichen in einer Ebene YZ erstrecken. Das Schutztor 70a kann insgesamt einen näherungsweise U-förmigen Querschnitt aufweisen, wobei die beiden Schenkel des U durch die Außenlasche 74 gebildet sind. Die Außenlaschen 74 können an einer korrespondierenden Innenwand 64a des Lagerlifts 10 aufgenommen oder angeschlagen sein. Die Innenwand 64a kann sich ebenso im Wesentlichen in der YZ-Ebene erstrecken. Anhand der Fig. 5 wird ferner ersichtlich, dass bei dieser Ausgestaltung die Antriebskette mit einem Mitnehmer 66 versehen sein muss, der lang genug ist, um die Aufnahmelaschen 74 in der Längsrichtung (X-Richtung) zu überbrücken. Auf diese Weise kann der Lagergutträger 20 in den Handhabungsabschnitt 26b eingebracht werden, wobei der Handhabungsabschnitt 26b durch das Schutztor 70a sicher (nach innen) verschließbar ist, ohne dass dann wesentliche Komponenten des Auszugs 44 für einen Bediener zugänglich sind.

Es sind weitere Gestaltungen von Antrieben für Lagersysteme denkbar, bei denen Zugmitteltriebe mit Zugmitteln erforderlich sein können, die "lange" oder "überlange" Mitnehmereinheiten erforderlich machen. Nachfolgend werden anhand der Fig. 6a bis 15 verschiedene Ausgestaltungen von Mitnehmereinheiten 66, 66a veranschaulicht und näher erläutert. Die Mitnehmereinheiten 66, 66a können als "lange" oder "überlange" Mitnehmereinheiten verstanden werden, die lange (seitliche) Mitnahmezapfen aufweisen. Die Mitnehmereinheiten 66, 66a können überdies hinaus Gestaltungen aufweisen, die das jeweilige Zugmittel (seitlich) versteifen, so dass auch außermittig eingebrachte Kräfte und ggf. damit verbundene Momente, die zu seitlichen Belastungen führen, die Funktionsfähigkeit und Lebensdauer des Zugmittels nicht oder nicht wesentlich herabsetzen.

Die Fig. 6a bis 12 veranschaulichen erste beispielhafte Ausgestaltungen einer Mitnehmereinheit 66 für einen Zugmitteltrieb, insbesondere einen Kettentrieb 50. Die Mitnehmereinheit 66 kann einer Antriebskette 54 zugeordnet sein (in den Fig. 6a bis 12 nur abschnittsweise dargestellt). Bei der Antriebskette 54 kann es sich insbesondere um eine Gliederkette handeln, beispielsweise um eine Rollenkette. Die Antriebskette 54 kann grundsätzlich als einreihige, ferner jedoch auch als mehrreihige, Antriebskette 54 ausgestaltet sein. So ist es vorstellbar, die Antriebskette 54 als sogenannte Duplexkette, Triplexkette usw. auszuführen. Die beispielhaft dargestellte Antriebskette 54 ist als Triplexkette ausgeführt, vgl. auch Fig. 9.

Fig. 6a und 6b zeigen perspektivische Ansichten der Mitnehmereinheit 66. Die Mitnehmereinheit 66 kann mit der Antriebskette 54 gekoppelt werden, insbesondere an Gliedern der Antriebskette 54 festgelegt werden. Die Mitnehmereinheit 66 weist zumindest ein Mitnehmerelement 78 auf. Dem Mitnehmerelement 78 können, zumindest in einigen Ausgestaltungen, Abstützelemente 80 zugeordnet sein. Beispielhaft ist das Mitnehmerelement 78 zwischen einem ersten Abstützelement 80-1 und einem zweiten Abstützelement 80-2 angeordnet, die in einer Haupterstreckungsrichtung 76 der Antriebskette 54 voneinander versetzt sind. Wenn die Antriebskette 54 bei einem Zugmitteltrieb 50 für einen Auszug 44 eines Lagerlifts 10 verwendet wird, kann die Haupterstreckungsrichtung 76 der Antriebskette 54 (zumindest abschnittsweise) mit der Auszugsrichtung 46 (vgl. Fig. 1 und Fig.2) übereinstimmen.

Am Mitnehmerelement 78 der Mitnehmereinheit 66 kann ein (seitlicher) Mitnahmenocken 86 ausgebildet sein. Der Mitnahmenocken 86 kann seitlich vom Mitnehmerelement 78 ausgehend hervorspringen, also etwa quer zur Haupterstreckungsrichtung 76. Der Mitnahmenocken 86 kann insbesondere als Mitnahmezapfen 88 oder in ähnlicher Weise gestaltet sein. Der Mitnahmenocken 86 ist insbesondere dazu ausgestaltet, in Mitnahmeausnehmungen einzugreifen, dabei kann es sich etwa um die Mitnahmeausnehmungen 62 des Lagergutträgers 20 handeln, vgl. auch Fig. 2.

Das Mitnehmerelement 78 und zumindest ein Abstützelement 80 können die Mitnehmereinheit 66 bilden, um die Antriebskette 54 gegen seitliche Belastungen zu sichern bzw. zu versteifen. Seitliche Belastungen können insbesondere solche Belastungen sein, die schräg, insbesondere quer, zur Haupterstreckungsrichtung 76 auftreten. Seitliche Belastungen können etwa auch dann eintreten, wenn Kräfte auf die Mitnehmereinheit 66 aufgebracht werden, die zwar parallel zur Haupterstreckungsrichtung 76 auf diese einwirken, aber einen außermittigen Kraftangriffspunkt haben, vgl. mit F bezeichnete Pfeile in Fig. 6b. Die Kräfte F wirken über einen Hebel auf die Antriebskette 54 und können demgemäß Biegemomente auf die in der Ebene (vgl. die Pfeile 76, 77 in Fig. 6b) im Wesentlichen steife Kette erzeugen.

Die mit der Mitnehmereinheit 66 versehene Antriebskette 54 ist in besonderer Weise dazu ausgebildet, mit einer Führungsstruktur 68 zusammenzuwirken. Beispielhaft kann die Führungsstruktur 68 eine Gleitschiene 82 sowie eine Führungsschiene 84 umfassen, vgl. insbesondere Fig. 6b und Fig. 11. Die Gleitschiene 82 kann insbesondere dazu ausgestaltet sein, direkt mit Gliedern der Antriebskette 54 zusammenzuwirken. Die Führungsschiene 84 kann dazu ausgebildet sein, mit der Mitnehmereinheit 66 zusammenzuwirken. Gemeinsam können die Gleitschienen 82 und die Führungsschiene 84 die (seitliche) Führungsstruktur 68 bilden, um die Antriebskette 54 seitlich zu führen und vor Überlastungen insbesondere durch Biegemomente zu schützen. Die Mitnehmereinheit 66 kann die Antriebskette 54 versteifen. Ferner kann die Mitnehmereinheit 66 die Führung der Antriebskette 54 an (externen) Führungsbahnen verbessern, wie etwa an der Führungsschiene 84.

Die Gleitschiene 82 kann zumindest eine erhabene Gleitfläche 92 aufweisen, die durch zumindest eine Führungsfläche 94, insbesondere zumindest eine seitliche Führungsfläche 94, begrenzt ist, vgl. Fig. 6a. Die erhabene Gleitfläche 92 kann dazu ausgestaltet sein, mit Kettenbolzen 98 oder an diesen aufgenommenen Rollen 96 zusammenzuwirken. Die Rollen 96 können drehbar an den Kettenbolzen 98 aufgenommen sein. Dergestalt kann die Antriebskette 54 als Rollenkette ausgestaltet sein. Rollenketten weisen allgemein günstige Paarungseigenschaften auf, wobei die Rollen 96 dazu ausgestaltet sind, gegenüber Gleitflächen 92 abzuwälzen. Die zumindest eine (seitliche) Führungsfläche 94 kann mit Laschen 100 der Antriebskette 54, insbesondere mit Innenlaschen 100, zusammenwirken. Auf diese Wiese kann durch die Gleitschiene 82 bereits eine gewisse seitliche Führung gewährleistet werden. Es hat sich jedoch gezeigt, dass die seitliche Führung für verschiedene Anwendungen möglichst noch verbessert werden sollte.

Fig. 6b zeigt, dass die seitliche Führung, also etwa die Führung gegen seitlich wirkende Lasten durch ein Zusammenwirken der Mitnehmereinheit 66 mit der Führungsstruktur 68 deutlich verbessert werden kann. Seitlich wirkende Lasten können quer zur Haupterstreckungsrichtung 76 und quer zu einer Höhenerstreckungsrichtung 79 auf die Antriebskette 54 einwirken, also etwa parallel zu einer Seitenrichtung 77. Die Gleitschiene 82 und die Führungsschiene 84, die die Führungsstruktur 68 bilden, können eine Bewegung der Antriebskette 54 in Richtung der Haupterstreckung 76 erlauben und ferner die Antriebskette 54 gegen anders orientierte Bewegungen oder Belastungen schützen. Dies kann die Verwendung überlanger Mitnahmenocken 86 bzw. Mitnahmezapfen 88 beim Mitnehmerelement 78 erlauben.

Fig. 7a, 7b und 7c veranschaulichen eine beispielhafte Gestaltung des Mitnehmerelements 78. Das Mitnehmerelement 78 kann etwa klammerartig oder brückenartig gestaltet sein. Das Mitnehmerelement 78 kann einen Rücken 102 aufweisen, der derart an eine Breite B (vgl. Fig. 9) der Antriebskette 54 angepasst ist, das das Mitnehmerelement 78 die Antriebskette 54 umgreifen bzw. umklammern kann. Vom Rücken 102 des Mitnehmerelements 78 kann sich ein Mitnahmeausleger 104 und ein Stützausleger 106 aus erstrecken. Der Mitnahmeausleger 104 kann in den Mitnahmenocken 86 bzw. den Mitnahmezapfen 88 übergehen bzw. in diesen münden. Der Mitnahmeausleger 104 und der Stützausleger 106 können mit Innenflächen 108, 110 versehen sein, die einander zugewandt sind. Die Innenflächen 108, 110 können die Antriebskette 54 kontaktieren. Der Mitnahmeausleger 104 und der Stützausleger 106 können dazu ausgebildet sein, mit Verbindungselementen 112, insbesondere mit Kettenbolzen, gekoppelt zu werden. Insbesondere können der Mitnahmeausleger 104 und der Stützausleger 106 mit Ausnehmungen versehen sein, in die die Verbindungselemente 112 eingeführt werden. Es ist bevorzugt, wenn das Mitnehmerelement 78 dazu ausgestaltet ist, mit zwei benachbarten Verbindungselementen 112 bzw. Kettenbolzen der Antriebskette 54 gekoppelt zu werden. Das Mitnehmerelement 78 kann der Antriebskette 54, insbesondere der mehrreihigen Antriebskette 54, eine erhöhte Steifigkeit verleihen und somit auch die Einleitung außermittig aufgebrachter Kräfte erlauben.

An seiner der Antriebskette 54 im montierten Zustand abgewandten Seite weist der Rücken 102 des Mitnehmerelements 78 einen Führungsabschnitt 114 auf, der beispielsweise eine erste Führungsflanke 116 und eine zweite Führungsflanke 118 aufweist. Die Führungsflanken 116, 118 können dazu ausgestaltet sein, mit der zumindest einen Führungsfläche 90 der Führungsschiene 84 zusammenzuwirken, um die Mitnehmereinheit 66 und die Antriebskette 54 abzustützen. Mit anderen Worten kann der Führungsabschnitt 114 ein Profil aufweisen, das an ein Profil der Führungsschiene 84 angepasst ist.

Fig. 8a, 8b und 8c veranschaulichen eine beispielhafte Ausgestaltung des zumindest einen Abstützelements 80. Das zumindest eine Abstützelement 80 kann grundsätzlich ähnlich dem zumindest einen Mitnehmerelement 78 gestaltet sein. Es ist jedoch bevorzugt, wenn das zumindest eine Abstützelement 80 keinen seitlichen Mitnahmenocken 86 bzw. Mitnahmezapfen 88 aufweist.

Analog dem Mitnehmerelement 78 kann das Abstützelement 80 mit einem Rücken 120 versehen sein, an dessen einem ersten Ende ein erster Halteausleger 122 und an dessen zweiten Ende ein zweiter Halteausleger 124 ausgebildet sind. Die Halteausleger 122, 124 können einander zugewandte Innenflächen 126, 128 aufweisen. Die Innenflächen 126, 128 können dazu ausgestaltet sein, an die Antriebskette 54 anzukoppeln. Auf der im montierten Zustand der Antriebskette 54 abgewandten Seite weist der Rücken 120 des zumindest einen Abstützelements 80 einen Führungsabschnitt 132 auf, der an die Führungsschiene 84 angepasst sein kann, um eine seitliche Führung des Abstützelements 80 zu gewährleisten. Insbesondere kann der Führungsabschnitt 132 eine erste Führungsflanke 134 und eine zweite Führungsflanke 136 aufweisen, die dazu ausgebildet sind, mit (seitlichen) Führungsflächen 90 der Führungsschiene 84 zusammenzuwirken.

Das Abstützelement 80 kann ferner dazu ausgestaltet sein, mit Verbindungselementen 130, insbesondere mit Kettenbolzen, gekoppelt zu werden, um das Abstützelement 80 an der Antriebskette 54 festzulegen. Die Verbindungselemente 130 können insbesondere mit dem ersten Halteausleger 122 und mit dem zweiten Halteausleger 124 gekoppelt werden. Den Fig. 7a bis 8c ist entnehmbar, dass die Verbindungselemente 112 bzw. 130 dem Mitnehmerelement 78 und dem Abstützelement 80 zugeordnet bzw. in diese eingebaut sind. Es versteht sich, dass das Mitnehmerelement 78 und das Abstützelement 80 erst dann zwingend mit den entsprechenden Verbindungselementen 112, 130 gefügt werden müssen, wenn eine Kopplung mit der Antriebskette 54 erfolgt. Demgemäß werden die Verbindungselemente 112, 130 in den Fig. 7a bis 8c vorrangig zur Veranschaulichung dargestellt.

Fig. 9 und Fig. 10 veranschaulichen eine Mitnehmereinheit 66, die aus einem Mitnehmerelement 78 und zwei Abstützelementen 80-1, 80-2 gebildet ist, und mit einer Antriebskette 54 gefügt ist. Die Antriebskette 54 ist beispielhaft als dreireihige Kette ausgebildet. Eine dreireihige Kette kann auch als Triplexkette bezeichnet werden. Die Antriebskette 54 weist demgemäß eine erste Reihe 150-1, eine zweite Reihe 150-2 und eine dritte Reihe 150-3 auf. Die Antriebskette 54 kann eine Mehrzahl von Gliedern 144-1, 144-2, 144-3 usw. umfassen. Die Glieder 144 können einreihig oder mehrreihig sein. Eine Reihe eines Gliedes 144 kann Außenlaschen 146-1, 146-2 und Innenlaschen 148-1, 148-2 umfassen. Die Innenlaschen 148 einer Reihe 150 sind grundsätzlich innerhalb der Außenlaschen 146 der Reihe angeordnet. Zwischen den Innenlaschen 148 können insbesondere bei Rollenketten Rollen 96 angeordnet sein, die auf Kettenbolzen 98 aufgenommen sind. Das Mitnehmerelement 78 und das zumindest eine Abstützelement 80 können auf verschiedene Weise mit der Antriebskette 54 gefügt werden.

So ist es Fig. 9 beispielsweise entnehmbar, dass die Abstützelemente 80-1, 80-2 seitlich an Außenlaschen 146 von Gliedern 144-1, 144-3 der Antriebskette 54 gekoppelt sind. Mit anderen Worten sind Gestaltungen des Abstützelements 80 und des Mitnehmerelements 78 denkbar, bei denen die Außenlaschen 146 der Antriebskette 54 nicht durch diese ersetzt werden. Bei einer solchen Gestaltung kann es von Vorteil sein, Verbindungselemente 130 (Fig. 8a bis 8c) vorzusehen, die länger als übliche Kettenbolzen sind (vgl. Bezugszeichen 98 in Fig. 9).

Das Mitnehmerelement 78 kann alternativ derart am Glied 144 der Antriebskette 54 aufgenommen sein, dass entsprechende Außenlaschen 146 durch den Mitnahmeausleger 104 und den Stützausleger 106 ersetzt sind. Auf diese Weise kann das Mitnehmerelement 78 Bestandteil des Kettenglieds 144-2 werden. Mit anderen Worten wäre die Antriebskette 54 geöffnet, würde man das Mitnehmerelement 78 entfernen. Zur Kopplung des Mitnehmerelements 78 mit der Antriebskette 54 können Verbindungselemente 112 verwendet werden, die grundsätzlich dem Kettenbolzen 98 der Antriebskette 54 entsprechen (vgl. Fig. 7a bis 7c). Durch den Entfall der Außenlaschen 146 kann sich ein genügend großer (seitlicher) Überstand ergeben, so das ein sicheres Fügen des Mitnehmerelements 78 ermöglicht ist. Es versteht sich, dass das Abstützelement 80 grundsätzlich analog dem Mitnehmerelement 78 mit der Antriebskette 54 koppelbar ist. Es ist auch vorstellbar, das Mitnehmerelement 78 analog dem Abstützelement 80 mit der Antriebskette 54 zu koppeln.

Fig. 9 veranschaulicht ferner verschiedene Abmessungen der Antriebskette 54 bzw. der Mitnehmereinheit 66. Die Antriebskette 54 weist eine Teilung p auf, die insbesondere dem Abstand zweier benachbarter Verbindungselemente oder Kettenbolzen 98 entspricht. Eine Gesamtbreite B wird durch jeweilige äußere Außenlaschen 146 der Antriebskette 54 definiert. Eine Reihe 150 der Antriebskette 54 kann eine Breite b aufweisen, die durch die Außenlaschen 146 dieser Reihe 150 definiert ist. Der Mitnahmezapfen 88 kann um ein Maß L seitlich über die Antriebskette 54 bzw. deren Außenlaschen 146 hervorstehen. Das Maß L kennzeichnet ferner die maximale Länge eines Hebelarms, über den eine außermittig aufgebrachte Kraft auf die Antriebskette 54 einwirken kann. Die Gestaltung der Mitnehmereinheit 66 erlaubt einen besonders großen seitlichen Überstand L des Mitnahmezapfens 88. Mit anderen Worten kann ein Verhältnis L/B besonders groß ausfallen, ohne dass mit einer übermäßigen Beanspruchung der Antriebskette 54 gerechnet werden muss.

Es ist ferner bevorzugt, wenn der Mitnahmezapfen 88 ein Zentrum aufweist, insbesondere eine im Wesentlichen zur seitlichen Richtung 77 parallele Achse, die in einer Ebene angeordnet ist, die durch die Achsen der Verbindungselemente 112 des Mitnehmerelements 78 definiert ist (vgl. Fig. 6b und Fig. 7b).

Einer Zusammenschau der Fig. 7a, 7b, 7c und 9 ist ferner entnehmbar, dass das Mitnehmerelement 78 mit zumindest einem Innensteg 138 versehen sein kann. Es ist besonders bevorzugt, wenn beim Mitnehmerelement 78 eine Anzahl von Innenstegen 138-1, 138-2 vorgesehen ist, die um eins kleiner ist als die Anzahl der Reihen der Antriebskette 54 ist. Beispielhaft weist das Mitnehmerelement 78 gemäß Fig. 9 einen ersten Innensteg 138-1 und einen zweiten Innensteg 138-2 auf. Der zumindest eine Innensteg 138 kann insbesondere dazu ausgestaltet sein, mittig angeordnete Außenlaschen 146 bei einer mehrreihigen Antriebskette 54 zu ersetzen. Demgemäß kann das Mitnehmerelement 78 dazu ausgestaltet sein, sämtliche Außenlaschen 146 des Kettengliedes 144-2, an das das Mitnehmerelement 78 andockt, zu ersetzen. Auf diese Weise kann die Antriebskette 54 deutlich versteift werden. Der zumindest eine Innensteg 138 kann mit entsprechenden Ausnehmungen für Verbindungselemente 112 bzw. Kettenglieder 98 versehen sein, die im montierten Zustand durch den Innensteg 138 hindurch ragen können. Es versteht sich, dass auch in dieser Hinsicht das zumindest eine Abstützelement 80 analog dem Mitnehmerelement 78 gestaltet sein kann.

Fig. 10 veranschaulicht eine weitere vorteilhafte Ausgestaltung der Mitnehmereinheit. Das Mitnehmerelement 78 und das zumindest eine Abstützelement 80, das dem Mitnehmerelement 78 benachbart ist, können derart ausgelegt und voneinander beabstandet sein, das sich zwischen einander zugewandten Frontalflächen 140, 142 ein definierter Spalt 152 ergeben kann. Das Mitnehmerelement 78 kann eine erste Frontalfläche 140 aufweisen, die einer Frontalfläche 142 des Abstützelements 80 zugewandt ist. Der Spalt 152 kann in einem unbelasteten Zustand hinreichend klein gestaltet sein. Der Spalt 152 ist idealerweise nahezu oder gleich Null ausgebildet. Im Falle einer außermittigen Belastung am Mitnahmezapfen 88 (vgl. Fig. 6b und Fig. 9) können bei der Antriebskette 54 Querkräfte, seitliche Kräfte bzw. Biegemomente erzeugt werden. Die Frontalflächen 140, 142 können in solchen Fällen als Anschläge bzw. Überlastungsschutz fungieren. Sofern eine (seitliche) Verformung der Antriebskette 54 auftritt, ist auf einer Seite der Antriebskette 54 mit einer Annäherung der Frontalflächen 142 und auf der dieser abgewandten anderen Seite der Antriebskette 54 mit einer Entfernung der Frontalflächen 140, 142 voneinander zu rechnen. Sobald die Frontalflächen 140, 142 einander kontaktieren, ist keine weitere Verformung möglich. Die Kette ist hochgradig versteift.

Fig. 11 zeigt eine seitliche Ansicht der Mitnehmereinheit 66, die etwa gemäß Fig. 6b mit der Führungsstruktur 68 gekoppelt ist. Fig. 12 zeigt einen Frontalschnitt gemäß der Linie XII-XII in Fig. 11. Es wird ersichtlich, dass zumindest gemäß verschiedener Ausgestaltungen die Führungsabschnitte 114, 132 des Mitnehmerelements 78 bzw. des Abstützelements 80 an ein Führungsprofil 154 (vgl. auch die Flächen 90-1, 90-2, 156) der Führungsschiene 84 angepasst sind. Vorliegend entspricht das Führungsprofil 154 im Wesentlichen einem Querschnitt bzw. Querschnittsprofil der Führungsschienen 84, zumindest an den Seiten der Führungsschiene 84, an denen diese mit dem Mitnehmerelement 78 bzw. der Mitnehmereinheit 66 zusammenwirkt. Demgemäß können die Führungsabschnitte 114, 132 dazu ausgestaltet sein, seitliche Führungsflächen 90-1, 90-2 und eine dem jeweiligen Rücken 102,120 zugewandte Kontaktfläche 156 zu kontaktieren. Querkräfte und Biegemomente können von der Führungsstruktur 68 effizient aufgefangen werden. Die Antriebskette 54 kann im Bereich ihrer Kettenglieder 150 deutlich entlastet werden.

Anhand der Fig. 13 wird eine alternative Ausgestaltung einer Mitnehmereinheit 66a veranschaulicht. Die Mitnehmereinheit 66a kann hinsichtlich ihres Grundaufbaus der Mitnehmereinheit 66 gemäß den Fig. 6a bis 12 im Wesentlichen entsprechen. Die Mitnehmereinheit 66a kann grundsätzlich in bekannter Weise mit einer Antriebskette 54a gekoppelt werden. Die Mitnehmereinheit 66a kann ferner mit einer Führungsschiene 84 und mit einer Gleitschiene 82 einer Führungsstruktur 68 zur seitlichen Führung zusammenwirken. Die Mitnehmereinheit 66a kann beispielhaft ein erstes Mitnehmerelement 78a und zumindest ein Abstützelement 80a umfassen. Anhand der in den Fig. 13 und 14 gezeigten Konfiguration wird ersichtlich, dass das Mitnehmerelement 78a zwischen einem ersten Abstützelement 80a-1 und einem zweiten Abstützelement 80a-2 angeordnet sein kann.

Im Bereich ihrer Rücken 102a, 120a weisen das Mitnehmerelement 78a und das Abstützelement 80a eine von den Fig. 6a bis 12 abweichende Gestaltung auf. Das Mitnehmerelement 78a und das Abstützelement 80a können sich in der Haupterstreckungsrichtung 76 zumindest teilweise überdecken. Hierzu können beim Rücken 102a des Mitnehmerelements 78a Vorsprünge 160 ausgebildet sein, die sich mit entsprechenden Ausnehmungen abwechseln, vgl. Fig. 14. Beim Rücken 120a des zumindest einen Abstützelements 80a können korrespondierende Vorsprünge 162 ausgebildet sein, die sich mit entsprechenden Ausnehmungen abwechseln. Bei den Vorsprüngen 160, 162 kann es sich insbesondere um kammartige oder fingerartige Vorsprünge handeln, die aneinander angepasst sind, um ineinander greifen zu können, vgl. auch Fig. 14.

Fig. 15 zeigt eine vereinfachte perspektivische Draufsicht des Abstützelements 80a. Das Mitnehmerelement 78a kann im Bereich seines Rückens 102a grundsätzlich ähnlich gestaltet sein, jedoch gemäß Fig. 14 an seinen beiden frontalen Enden mit Vorsprüngen 160 versehen sein.

Das Mitnehmerelement 78a und das Abstützelement 80a können die Antriebskette 54a weiter versteifen. Die Steifigkeit gegen seitlich einwirkende Lasten kann insbesondere auch dann noch gegeben sein, wenn keine Führung durch die Führungsschiene 84 mehr gewährleistet ist. Dies kann etwa bei Umlenkungen der Fall sein, vgl. Fig. 13. Prinzipbedingt können sich die Rücken 102a, 120a bei Umlenkungen der Antriebskette 54a zumindest abschnittsweise voneinander entfernen. Da jedoch die Vorsprünge 160, 162 zumindest teilweise ineinander eingreifen, also für eine Überdeckung sorgen, kann weiterhin die Fähigkeit zu einer seitlichen Führung durch die Mitnehmereinheit 66a selbst gegeben sein. Bei der anhand der Fig. 13 bis 15 gezeigten Ausgestaltung können das erste Abstützelement 80a-1 und das zweite Abstützelement 80a-2 im Wesentlichen identisch gestaltet sein. Die Abstützelemente 80a sind lediglich um 180° verdreht zueinander angeordnet. Auch die anhand der Fig. 13 bis 15 gezeigte Weiterbildung kann zur seitlichen Versteifung der Antriebskette 54 beitragen. Außermittig auf den Mitnahmezapfen 88 einwirkende Lasten können effizient aufgefangen und abgeleitet werden.

Anhand der Fig. 16 und 17 wird eine alternative Ausgestaltung einer Mitnehmereinheit 66b bzw. eines Mitnehmerelements 78b veranschaulicht.

Analog zu den Gestaltungen gemäß den Fig. 7a bis 7c weist das Mitnehmerelement 78b einen Rücken 102, einen Mitnahmeausleger 104 und einen Stützausleger 106 auf, vgl. auch Fig. 17. Zwischen dem Mitnahmeausleger 104 und dem Stützausleger 106 können Innenstege 138-1, 138-2 angeordnet sein. Das Mitnehmerelement 78b ist dazu ausgebildet, an Verbindungselementen 112, etwa an Kettenbolzen, festgelegt zu werden. Der Führungsabschnitt 114a des Mitnehmerelements 78b ist von den Gestaltungen gemäß den Fig. 7a bis 7c abweichend ausgeführt. Vorzugsweise weist der Führungsabschnitt 114a zumindest eine Führungsrolle 166 auf. Beispielhaft können am Mitnehmerelement 78b zwei Führungsrollen 166-1, 166-2 aufgenommen sein, vgl. auch Fig. 16. Die Führungsrollen 166 können an Bolzen 168 aufgenommen sein, die an den Rücken 102 des Mitnehmerelements 78b angekoppelt sind. Die Bolzen 168 können insbesondere parallel zur Höhenerstreckungsrichtung 79 orientiert sein, also im Wesentlichen senkrecht zur Seitenrichtung 77 sowie senkrecht zur Haupterstreckungsrichtung 76. Vorzugsweise sind die Führungsrollen 166 an den Bolzen 168 drehbar aufgenommen. Insbesondere können die Führungsrollen 166 als Lagerrollen ausgebildet sein.

Die Führungsrollen 166-1, 166-2 können in einem Abstand 170 voneinander am Mitnehmerelement 78b aufgenommen sein. Die Führungsrollen 166 können einen mit 172 bezeichneten Durchmesser aufweisen. Vorzugsweise ist der Durchmesser 172 der Führungsrollen 166 derart an eine Vertiefung oder Ausnehmung einer Führungsschiene 84a (Fig. 17) angepasst, dass eine hinreichende seitliche Führung für das Mitnehmerelement 78b gewährleistet ist. Das zugehörige Führungsprofil 154a weist eine mit 174 bezeichnete Führungsbreite auf, die etwas größer als der Durchmesser 172 der Führungsrollen 166 gewählt ist. Es versteht sich, dass hierbei ein möglichst kleiner Spalt verbleibt, wobei sicherzustellen ist, dass kein Klemmen der Führungsrollen 166 im Führungsprofil 154a droht. Sofern nun eine außermittige Kraft etwa über den Mitnehmerzapfen 88 auf das Mitnehmerelement 78b einwirkt, kann eine der Führungsrollen 166-1, 166-2 an der Führungsfläche 90-1 und die andere an der Führungsfläche 90-2 zur Anlage kommen. Demgemäß können sich definierte Wälzbewegungen zwischen den Führungsrollen 166-1, 166-2 und den Führungsflächen 90-1, 90-2 ergeben. Der im Wesentlichen U-förmige Querschnitt des Führungsprofils 154a in der Führungsschiene 84a erlaubt es dem des Führungsprofil 154a, die Führungsrollen 166 seitlich zu umgreifen und zu führen.

Durch geeignete konstruktive Maßnahmen, wie etwa Ausleger oder dgl. am Rücken 102, kann der Abstand 170 zwischen den Führungsrollen 166-1, 166-2 derart gewählt werden, dass die Belastung einer Antriebskette 54, an der das Mitnehmerelement 78b aufgenommen ist, in beträchtlichem Maße reduziert wird. Bei einer Gestaltung der Mitnehmereinheit 66b gemäß der anhand der Fig. 16 und 17 veranschaulichten Ausgestaltungen kann gegebenenfalls sogar auf (zusätzliche) Abstützelemente 80 verzichtet werden (vgl. demgegenüber etwa die Abstützelemente 80-1, 80-2 in Fig. 11). In einem solchen Fall könnte die sich ergebende Antriebskette 54 sowohl zum Durchfahren positiver Radien als auch - zumindest in begrenztem Maße - zum Durchfahren negativer Radien gemäß der weiter unten Zusammenhang mit Fig. 19 angegebenen Definition geeignet sein.

Eine alternative Ausgestaltung einer Mitnehmereinheit 66c, die sich ähnliche Prinzipien zu Eigen macht, wird anhand der Fig. 18 veranschaulicht, die eine stark vereinfachte Draufsicht der Mitnehmereinheit 66c zeigt. Die Mitnehmereinheit 66c weist ein Mitnehmerelement 78c auf, das von einem Abstützelement 80b-1 und einem Abstützelement 80b-2 flankiert wird. Jedes der Abstützelemente 80b-1 und 80b-2 weist in seinem Führungsabschnitt 132a eine Führungsrolle 176-1, 176-2 auf, die grundsätzlich analog der Führungsrolle 166 gemäß der Fig. 16 und 17 gestaltet sein kann. Die Führungsrollen 176-1, 176-2 können an Bolzen 178 aufgenommen sein, die am Rücken 120 des jeweiligen Abstützelements 80b-1, 80b-2 festgelegt sein können.

Die Führungsrollen 176 können einen Durchmesser 182 aufweisen, der in geeigneter Weise an eine Führungsbreite 184 des Führungsprofils 154a der Führungsschiene 84a angepasst ist, vgl. hierzu auch Fig. 17. Die Führungsrollen 176-1, 176-2 einer Mitnehmereinheit 66c können voneinander beabstandet mit einem Abstand 180 an den Abstützelementen 80b-1, 80b-2 aufgenommen sein. Der Abstand 180 kann regelmäßig größer als der Abstand 170 (Fig. 16) ausgelegt sein. Demgemäß kann ein noch größerer "Hebel" zur Aufnahme von Kippmomenten gegebenen sein. Die Mitnehmereinheit 66c kann noch wirksamer an der Führungsschiene 84a aufgenommen und geführt werden.

Gemäß der in Fig. 18 gezeigten Ausgestaltung muss das Mitnehmerelement 78c nicht unbedingt selbst mit einem Führungsabschnitt versehen sein. Vielmehr kann das Mitnehmerelement 78c "mittelbar" mit den Führungsabschnitten 132a der Abstützelemente 80b-1, 80b-2 gekoppelt sein. Auch bei dieser Gestaltung ist eine effiziente Führung der Mitnehmereinheit 66c an der Führungsschiene 84a gewährleistet.

Die anhand der Fig. 18 veranschaulichte Ausgestaltung weist den weiteren Vorteil auf, dass der Durchmesser 182 der Führungsrollen 176-1, 176-2 grundsätzlicher größer als der Durchmesser 172 der Führungsrollen 168 gemäß Fig. 16 gewählt werden kann. Dies wird insbesondere durch den möglichen größeren Abstand 180 zwischen den Bolzen 178 der Führungsrollen 176 gestattet. Demgemäß kann auch die Führungsbreite 184 in der Führungsschiene 84a größer ausfallen als die Führungsbreite 174 gemäß Fig. 16. Dies kann mit dem Vorteil einhergehen, dass die Flächenpressung zwischen den Führungsrollen 176 und der Führungsschiene 84a weiter reduziert werden kann.

Fig. 19 zeigt eine stark vereinfachte schematische Seitenansicht einer Antriebskette 54a, die gegenüber der Antriebskette 54 gemäß Fig. 2 abgewandelt ist. Analog zur Antriebskette 54 kann die Antriebskette 54a an einem Portaltisch 48 eines Hubantriebs 36 aufgenommen sein, um Lagergutträger 20 zwischen Regalabschnitten 16 und einem Handhabungsabschnitt 26 eines Lagersystems 10 transportieren zu können, vgl. auch Fig. 1 und Fig. 2. Die Antriebskette 54a kann insbesondere einem Auszug 44 der Hubeinheit 36 zugeordnet sein.

Insbesondere anhand der Darstellungen gemäß den Fig. 11 und Fig. 13 wird ersichtlich, dass verschiedene der vorstehend beschriebenen Ausgestaltungen der Mitnehmereinheiten 66 mit den Mitnehmerelementen 68 und den Abstützelementen 80 nicht dazu geeignet sind, sowohl positive Radien als auch negative Radien durchlaufen zu können. Unter Bezugnahme auf Fig. 2 wird definiert, dass ein positiver Radius etwa beim Umlauf um die Umlenkungen oder Umlenkrollen 58-1, 58-3 durchlaufen wird. Demgemäß wird etwa beim Umlauf um die Umlenkrolle 58-2 bzw. beim Umlauf um die Spannrolle 60 ein negativer Radius durchlaufen. Insbesondere die bevorzugte Gestaltung der Frontalflächen 140, 142 der Mitnehmerelemente 78 bzw. der Abstützelemente 80 (vgl. Fig. 10) kann die mit dem Durchlaufen eines negativen Radius verbundene Durchbiegung der Antriebskette 54a schlichtweg unmöglich machen.

Demgemäß kann es von Vorteil sein, die Antriebskette 54a, wie in Fig. 19 gezeigt, ausschließlich um gerade und positiv gekrümmte Abschnitte umlaufen zu lassen. Positiv gekrümmte Abschnitte können auch als konvexe Abschnitte bezeichnet werden. Beispielhaft ist die Antriebskette 54a an einem Antriebsrad 56, einer Umlenkrolle 58 sowie an Spannrollen 60-1, 60-2 aufgenommen. Beim Umlauf um die Elemente 56, 58, 60 werden ausschließlich gerade Teilstücke sowie gleichsinnige positive Radien durchlaufen. Für derartige Pfade sind die Mitnehmereinheiten 66 gemäß den hierin gezeigten Ausgestaltungen ohne Weiteres geeignet. Die Spannrollen 60-1, 60-2 können beispielhaft an Hebeln oder an Langlöchern aufgenommen sein, um gegebenenfalls zum Spannen der Antriebskette 54a bewegt werden zu können.

Die Antriebskette 54a ist beispielhaft mit einer ersten Mitnehmereinheit 66-1 und einer zweiten Mitnehmereinheit 66-2 versehen. Mittels der an der Antriebskette 54a aufgenommenen Mitnehmereinheiten 66-1, 66-2 können Lagergutträger 20 (vgl. Fig. 1 und Fig. 2) entlang der Auszugsrichtung 46 zwischen verschiedenen Regalabschnitten 16 bzw. zwischen Regalabschnitten 16 und einem Handhabungsabschnitt 26 transferiert werden. Die Bewegung erfolgt grundsätzlich nicht ausschließlich in einer Richtung. Vielmehr ist eine Vorwärtsbewegung und eine Rückwärtsbewegung denkbar. Auch wenn die Antriebskette 54a demgemäß nicht unbedingt vollständig umlaufen muss, sind jedoch die Verfahrwege der Antriebskette 54a häufig groß genug, so dass es bei einer Konfiguration gemäß Fig. 2 durchaus zu einem Einfahren einer der Mitnehmereinheiten 66-1, 66-2 in einen negativen Krümmungsbereich kommen kann, vgl. etwa die Umlenkung 58-2, die in der in Fig. 2 gezeigten Stellung der Antriebskette 54 nahe der Mitnehmereinheit 66-1 angeordnet ist.

Es versteht sich, dass eine Gestaltung gemäß Fig. 2 gleichwohl verwendbar ist, wenn abgesichert ist, dass der Verfahrweg der Antriebskette 54 begrenzt ist, so dass keine Gefahr des Einlaufens einer der Mitnehmereinheiten 66-1, 66-2 in den Bereich der negativen Radien oder Krümmungen gegeben ist.

## Patentansprüche

1. Mitnehmereinheit (66) für ein als Antriebskette (54) eines Lagersystems (10) gestaltetes Zugmittel (52), wobei die Mitnehmereinheit (66) zumindest ein Mitnehmerelement (78) aufweist, das dazu ausgebildet ist, das Zugmittel (52) quer zu einer Haupterstreckungsrichtung (76) des Zugmittels (52) zu umgreifen, wobei das zumindest eine Mitnehmerelement (78) einen Rücken (102) sowie einen Mitnahmeausleger (104) und einen Stützausleger (106) zur Befestigung am Zugmittel (52) aufweist, wobei der Mitnahmeausleger (104) und der Stützausleger (106) mit Verbindungselementen (112) des Zugmittels (52) koppelbar sind, und wobei beim Mitnahmeausleger (104) ein seitlich hervorstehender Mitnahmezapfen (88) angeordnet ist,
wobei die Mitnehmereinheit (66) ferner am Mitnehmerelement (78) einen Führungsabschnitt (114, 132) aufweist, der an der Seite des Rückens (102) vorgesehen ist, die im montierten Zustand vom Zugmittel (52) abgewandt ist, und wobei der Führungsabschnitt (114, 132) im montierten Zustand vom Zugmittel (52) abgewandt und zur seitlichen Führung mit einer Führungsschiene (84) koppelbar ist, wobei der Mitnahmeausleger (104) in den Mitnahmezapfen (88) mündet, **dadurch gekennzeichnet, dass**
- der Führungsabschnitt (114, 132) eine erste Führungsflanke (134, 116) und eine zweite Führungsflanke (136, 118) aufweist, die dazu ausgebildet sind, mit seitlichen Führungsflächen (90) der Führungsschiene (84) zusammenzuwirken,
- zwischen dem Mitnahmeausleger (104) und dem Stützausleger (106) Innenstege (138-1, 138-2) angeordnet sind,
- die Innenstege (138-1, 138-2) mit entsprechenden Ausnehmungen für Verbindungselemente (112) und/oder Kettenbolzen (98) versehen sind, die im montierten Zustand durch den Innensteg (138) hindurch ragen.

2. Mitnehmereinheit (66) nach Anspruch 1, wobei der Mitnahmeausleger (104) und der Stützausleger (106) zur Kopplung mit einer Mehrzahl von Verbindungselementen (112) des Zugmittels (52) ausgebildet sind, die insbesondere parallel zueinander beabstandet angeordnet sind und quer zur Haupterstreckungsrichtung (76) des Zugmittels (52) orientiert sind, wobei jedes gekoppelte Verbindungselement (112) sowohl mit dem Mitnahmeausleger (104) als auch mit dem Stützausleger (106) koppelbar ist.

3. Mitnehmereinheit (66) nach Anspruch 1 oder 2, wobei zumindest eine der Führungsflanken (116, 118) an die Führungsschiene (84) angreifen kann, vorzugsweise die erste Führungsflanke (116) und die zweite Führungsflanke (118), die dazu ausgebildet sind, ein Führungsprofil (154) der Führungsschiene (84) seitlich zu umgreifen.

4. Mitnehmereinheit (66) nach Anspruch 1 oder 2, wobei der Führungsabschnitt (114, 132) zumindest eine Führungsrolle (166) aufweist, die am Rücken (102) des zumindest einen Mitnehmerelements (78) drehbar aufgenommen ist und an die Führungsschiene (84) angreifen kann, vorzugweise zwei in der Haupterstreckungsrichtung (76) zueinander versetzte Führungsrollen (166-1, 166-2), die umfangsseitig in ein nutförmiges Führungsprofil (154) der Führungsschiene (84) eingreifen können.

5. Mitnehmereinheit (66) nach einem der vorhergehenden Ansprüche, wobei die Innenstege des zumindest einen Mitnehmerelements (78) dazu ausgebildet sind, in Lücken zwischen Reihen (150) des Zugmittels (52) einzugreifen, wobei die Innenstege (138) vorzugsweise dazu ausgebildet ist, zumindest eine mittige Lasche (100, 146), insbesondere zwei benachbarte Laschen (100, 146), bei einem mehrreihigen Zugmittel (52) zu ersetzen.

6. Mitnehmereinheit (66) nach einem der vorhergehenden Ansprüche, ferner aufweisend zumindest ein Abstützelement (80), das dem Mitnehmerelement (78) benachbart ist, wobei das zumindest eine Abstützelement (80) einen Rücken (120) sowie einen ersten Halteausleger (122) und einen zweiten Halteausleger (124) zur Befestigung am Zugmittel (52) aufweist, die vorzugsweise im montierten Zustand voneinander abgewandten Laschen (100, 146, 148) des Zugmittels (52) benachbart sind, wobei der erste Halteausleger (122) und der zweite Halteausleger (124) mit Verbindungselementen (130) des Zugmittels (52), insbesondere mit Verbindungsbolzen (98) koppelbar sind, und wobei der Rücken (120) ferner einen Führungsabschnitt (132) aufweist, der im montierten Zustand vom Zugmittel (52) abgewandt ist und zur seitlichen Führung mit einer Führungsschiene (84) koppelbar ist.

7. Mitnehmereinheit (66) nach Anspruch 6, wobei das zumindest eine Mitnehmerelement (78) und das zumindest eine Abstützelement (80) in der Haupterstreckungsrichtung (76) voneinander versetzt sind und derart voneinander beabstandet sind, dass bei seitlichen Auslenkungen des Zugmittels (52) einander zugewandte Frontalflächen (140, 142) der Mitnahmeausleger (104), der Stützausleger (106) und der Halteausleger (122, 124) miteinander in Kontakt treten können.

8. Mitnehmereinheit (66) nach Anspruch 6 oder 7, wobei das zumindest eine Mitnehmerelement (78) und das zumindest eine Abstützelement (80) im Bereich ihrer Rücken (102, 120) miteinander korrespondierende Eingriffskonturen (160, 162), insbesondere Vorsprünge und Ausnehmungen, aufweisen, die dazu ausgebildet sind, ineinander einzugreifen.

9. Mitnehmereinheit (66) nach einem der Ansprüche 6 bis 8, wobei der Führungsabschnitt (132) zumindest eine Führungsrolle (176) aufweist, die am Rücken (120) des zumindest einen Abstützelements (80) drehbar aufgenommen ist und an die Führungsschiene (84) angreifen kann, wobei vorzugweise zwei in der Haupterstreckungsrichtung (76) zueinander versetzte Abstützelemente (80-1, 80-2) vorgesehen sind, die jeweils eine Führungsrolle (176-1, 176-2) aufweisen, wobei das zumindest eine Mitnehmerelement (78) zwischen den Abstützelementen (80-1, 80-2) angeordnet ist.

10. Antriebskette (54) mit zumindest einer Mitnehmereinheit (66) nach einer der vorhergehenden Ansprüche, wobei die Antriebskette (54) eine Mehrzahl von Gliedern (144) mit Laschen (100, 146, 148) aufweist, die durch Kettenbolzen miteinander gekoppelt sind, wobei zumindest einige der Kettenbolzen (98) der Antriebskette (54) als Verbindungsbolzen (98), insbesondere als verlängerte Verbindungsbolzen, ausgestaltet sind und mit dem Mitnahmeausleger (104) und dem Stützausleger (106) eines Mitnehmerelements (78) der Mitnehmereinheit (66) gekoppelt sind, und wobei die Mitnehmereinheit (66) zur Bewegungsmitnahme an der Antriebskette (54) festgelegt ist.

11. Antriebskette (54) nach Anspruch 10, wobei die zumindest eine Mitnehmereinheit (66) ferner zumindest ein dem Mitnehmerelement (78) benachbartes Abstützelement (80), vorzugsweise zwei dem Mitnehmerelement (78) benachbarte Abstützelemente (80), aufweist, wobei das zumindest eine Mitnehmerelement (78) und das zumindest eine Abstützelement (80) an benachbarten Gliedern (144) der Antriebskette (54) festgelegt sind.

12. Antriebskette (54) nach Anspruch 10 oder 11, wobei die zumindest eine Mitnehmereinheit (66) dazu ausgebildet ist, zur seitlichen Führung der Antriebskette (54) an eine Führungsschiene (84) anzugreifen, und wobei die Antriebskette (54) ferner Gleitrollen (96) aufweist, die zwischen Laschen (148) der Antriebskette (54) an den Kettenbolzen (98) aufgenommen sind, wobei die Glieder (144) der Antriebskette (54) dazu ausgebildet sind, zur Führung der Antriebskette (54) an eine Gleitschiene (82) anzugreifen, die vorzugsweise eine Gleitbahn (92) für die Gleitrollen (96) aufweist.

13. Antriebskette (54) nach einem der Ansprüche 10 bis 12, wobei die Antriebskette (54) als mehrreihige Kette ausgebildet ist, insbesondere als Duplexkette oder Triplexkette, wobei zumindest das zumindest eine Mitnehmerelement (78) zumindest einen Innensteg (138) aufweist, der im montierten Zustand in Lücken zwischen parallelen Reihen der Antriebskette (54) eingreift.

14. Lagersystem (10), insbesondere Lagerlift, das Folgendes aufweist:
- ein Gestell (12) mit zumindest einem Regalabschnitt (16), wobei der zumindest eine Regalabschnitt (16) eine Mehrzahl von Aufnahmeelementen (18) für Lagergutträger (20), insbesondere für Tablare, aufweist,
- zumindest einen Handhabungsabschnitt (26) mit einer Transferöffnung (28), wobei der zumindest eine Handhabungsabschnitt (26) insbesondere in zumindest einen Regalabschnitt (16) eingebracht ist,
- einen Hubantrieb (36), insbesondere einen Vertikalförderer, zum selektiven Anheben oder Absenken der Lagergutträger (20), und
- einen Auszug (44), der zumindest einen Kettentrieb (50) mit einer Antriebskette (54) nach einem der Ansprüche 10 bis 13 aufweist, wobei der zumindest eine Kettentrieb (50) dazu ausgestaltet ist, Lagergutträger (20) zwischen den Regalabschnitten (16), dem zumindest einen Handhabungsabschnitt (26) und dem Hubantrieb (36) umzulagern.

15. Lagersystem (10) nach Anspruch 14, ferner aufweisend ein Schutztor (70), das eine Transferöffnung (28), insbesondere eine innere Transferöffnung, des Handhabungsabschnitts (26) verschließen kann, wobei das Schutztor (70) vorzugsweise dazu ausgestaltet ist, die Transferöffnung (28) selektiv zu verschließen, wenn ein Lagergutträger (20) vor der Transferöffnung (28) im Handhabungsabschnitt (26) positioniert ist, und wobei das Schutztor vorzugsweise seitliche abgewinkelte Aufnahmelaschen (74) aufweist, die an Innenwänden (66) eines Gehäuses (14) des Lagersystems (10) aufgenommen sind.

## Claims

1. A driving unit (66) for a traction means (52) that is configured as a drive chain (54) of a storage system (10), the driving unit (66) comprising at least one driver element (78) adapted to engage the traction means (52) transversely to a main extension direction (76) of the traction means (52), wherein the at least one driver element (78) comprises a back (102) and a driving arm (104) and a support arm (106) for attachment to the traction means (52), wherein the driving arm (104) and the support arm (106) are connectable to connecting elements (112) of the traction means (52), and wherein a laterally projecting driving pin (88) is arranged on the driving arm (104),
wherein the driving unit (66) further comprises at the driver element (78) a guide section (114, 132) that is provided on the side of the back (102) which side in the mounted state is facing away from the traction means (52), and wherein the guide section (114, 132) in the mounted state is facing away from the traction means (52) and arranged to be coupled to a guide rail (84) for lateral guidance,
wherein the driving arm (104) leads to the driving pin (88),
**characterized in that**
- the guide portion (114, 132) comprises a first guide flank (134, 116) and a second guide flank (136, 118) that are adapted to cooperate with lateral guide surfaces (90) of the guide rail (84),
- inner webs (138-1, 138-2) are arranged between the driving arm (104) and the support arm (106),
- the inner webs (138-1, 138-2) are provided with corresponding recesses for connecting elements (112) and/or chain pins (98) which, in the assembled state, extend through the inner web (138).

2. The driving unit (66) according to claim 1, wherein the driving arm (104) and the support arm (106) are arranged for coupling to a plurality of connecting elements (112) of the traction means (52), which are arranged in particular parallel to one another at a distance from one another and which are oriented transversely to the main direction of extension (76) of the traction means (52), wherein each one of the coupled connecting elements (112) can be coupled both to the driving arm (104) and to the support arm (106).

3. The driving unit (66) according to claim 1 or 2, wherein at least one of the guide flanks (116, 118) can engage the guide rail (84), preferably the first guide flank (116) and the second guide flank (118), which are designed to laterally encompass a guide profile (154) of the guide rail (84).

4. The driving unit (66) according to claim 1 or 2, wherein the guide section (114, 132) comprises at least one guide roller (166) which is rotatably received on the back (102) of at least one driver element (78) and which can engage the guide rail (84), preferably two guide rollers (166-1, 166-2) which are offset relative to one another in the main extension direction (76) and which can engage circumferentially in a groove-shaped guide profile (154) of the guide rail (84).

5. The driving unit (66) according to any one of the preceding claims, the inner webs of the at least one driver element (78) are arranged to engage in gaps between rows (150) of the traction means (52), wherein the inner webs (138) are preferably designed to replace at least one central plate (100, 146), in particular two adjacent plates (100, 146), in a multi-row traction means (52).

6. The driving unit (66) according to any one of the preceding claims, further comprising at least one support element (80) which is adjacent to the driver element (78), wherein the at least one support element (80) comprises a back (120) and a first retaining arm (122) and a second retaining arm (124) for attachment to the traction means (52), which preferably in the mounted state are adjacent to plates (100, 146, 148) of the traction means (52) facing away from one another, wherein the first retaining arm (122) and the second retaining arm (124) are arranged to be coupled to connecting elements (130) of the traction means (52), in particular to connecting bolts (98), and wherein the back (120) further comprises a guide section (132) which, in the assembled state, faces away from the traction means (52) and which is arranged to be coupled to a guide rail (84) for lateral guidance.

7. The driving unit (66) according to claim 6, wherein the at least one driver element (78) and the at least one support element (80) are offset from one another in the main extension direction (76) and are spaced away from one another in such a way that, in the event of lateral deflections of the pulling means (52), frontal surfaces (140, 142) of the driving arms (104), the support arms (106) and the holding arms (122, 124), the frontal surfaces facing one another (140, 142), can come into contact with one another.

8. The driving unit (66) according to claim 6 or 7, wherein the at least one driver element (78) and the at least one support element (80) have in the region of their backs (102, 120) engagement contours (160, 162), in particular projections and recesses, which correspond with one another and which arranged to engage one another.

9. The driving unit (66) according to any one of claims 6 to 8, wherein the guide section (132) comprises at least one guide roller (176) which is rotatably supported on the back (120) of the at least one support element (80) and which can engage the guide rail (84), wherein preferably two support elements (80-1, 80-2) are provided which are offset relative to one another in the main extension direction (76) and which each have a guide roller (176-1, 176-2), wherein the at least one driver element (78) is arranged between the support elements (80-1, 80-2).

10. A driving chain (54) comprising at least one drive unit (66) according to any one of the preceding claims, the drive chain (54) having a plurality of links (144) with link plates (100, 146, 148) which are coupled to one another by chain pins, wherein at least some of the chain pins (98) of the drive chain (54) are arranged as connecting pins (98), in particular as extended connecting bolts, and are coupled to the driving arm (104) and the support arm (106) of a driver element (78) of the driving unit (66), and wherein the driving unit (66) is fixedly attached to the drive chain (54) for driving entrainment.

11. The driving chain (54) according to claim 10, wherein the at least one driving unit (66) further comprises at least one support element (80) that is adjacent to the driver element (78), preferably two support elements (80) that are adjacent to the driver element (78), wherein the at least one driver element (78) and the at least one support element (80) are fixedly attached to adjacent links (144) of the drive chain (54).

12. The driving chain (54) according to claim 10 or 11, wherein the at least one driving unit (66) is arranged to engage a guide rail (84) for laterally guiding the drive chain (54), and wherein the drive chain (54) further comprises sliding rollers (96) that are supported on the chain pins (98) between link plates (148) of the drive chain (54), therein the links (144) of the drive chain (54) are arranged to engage a slide rail (82), which preferably comprises a slide path (92) for the sliding rollers (96), for guiding the drive chain (54).

13. The driving chain (54) according to any one of the claims 10 to 12, wherein the drive chain (54) is designed as a multi-row chain, in particular as a duplex chain or triplex chain, wherein at least the at least one driver element (78) comprises at least one inner web (138) which, in the assembled state, engages in gaps between parallel rows of the drive chain (54).

14. A storage system (10), in particular a storage lift, comprising:
- a frame (12) comprising at least one shelf section (16), wherein the at least one shelf section (16) comprises a plurality of receiving elements (18) for storage goods carriers (20), in particular for trays,
- at least one handling section (26) comprising a transfer opening (28), wherein the at least one handling section (26) is in particular formed in at least one shelf section (16),
- a lifting drive (36), in particular a vertical conveyor, for selectively lifting or lowering the storage goods carriers (20), and
- an extractor (44) comprising at least one chain drive (50) comprising a drive chain (54) according to any one of claims 10 to 13, wherein the at least one chain drive (50) is arranged to relocate storage goods carriers (20) between the shelf sections (16), the at least one handling section (26) and the lifting drive (36).

15. The storage system (10) according to claim 14 further comprising a protective door (70) that is capable of closing a transfer opening (28), in particular an inner transfer opening, of the handling portion (26), wherein the protective door (70) is preferentially arranged to selectively close the transfer opening (28), when a storage goods carrier (20) is positioned in front of the transfer opening (28) in the handling section (26), and wherein the protective gate preferably comprises lateral angled receiving tabs (74) which are mounted on inner walls (66) of a housing (14) of the storage system (10).

## Revendications

1. Ensemble entraîneur (66) pour un moyen de traction (52) configuré sous forme de chaîne d'entraînement (54) d'un système de stockage (10), l'ensemble entraîneur (66) présentant au moins un élément entraîneur (78) qui est réalisé de manière à venir en prise autour du moyen de traction (52) transversalement à une direction d'étendue principale (76) du moyen de traction (52), l'au moins un élément entraîneur (78) présentant un dos (102) ainsi qu'un bras d'entraînement (104) et un bras de support (106) pour la fixation au moyen de traction (52), le bras d'entraînement (104) et le bras de support (106) pouvant être accouplés à des éléments de connexion (112) du moyen de traction (52), et un tourillon d'entraînement faisant saillie latéralement (88) étant disposé au niveau du bras d'entraînement (104),
l'ensemble entraîneur (66) présentant en outre sur l'élément entraîneur (78) une section de guidage (114, 132) qui est prévue du côté du dos (102) et qui est opposée au moyen de traction (52) dans l'état monté, et la section de guidage (114, 132), dans l'état monté, étant opposée au moyen de traction (52) et pouvant être accouplée avec un rail de guidage (84) en vue d'un guidage latéral, le bras d'entraînement (104) débouchant dans le tourillon d'entraînement (88), **caractérisé en ce que**
- la section de guidage (114, 132) présente un premier flanc de guidage (134, 116) et un deuxième flanc de guidage (136, 118) qui sont réalisés de manière à coopérer avec des surfaces de guidage latérales (90) du rail de guidage (84),
- entre le bras d'entraînement (104) et le bras de support (106) sont disposées des nervures intérieures (138-1, 138-2),
- les nervures intérieures (138-1, 138-2) sont pourvues d'évidements correspondants pour des éléments de connexion (112) et/ou des boulons de chaîne (98) qui font saillie à travers la nervure intérieure (138) dans l'état monté.

2. Ensemble entraîneur (66) selon la revendication 1, dans lequel le bras d'entraînement (104) et le bras de support (106) sont réalisés pour l'accouplement avec une pluralité d'éléments de connexion (112) du moyen de traction (52) qui sont notamment disposés parallèlement à distance les uns des autres et qui sont orientés transversalement à la direction d'étendue principale (76) du moyen de traction (52), chaque élément de connexion accouplé (112) pouvant à la fois être accouplé au bras d'entraînement (104) et au bras de support (106).

3. Ensemble entraîneur (66) selon la revendication 1 ou 2, dans lequel au moins l'un des flancs de guidage (116, 118) peut venir en prise sur le rail de guidage (84), de préférence le premier flanc de guidage (116) et le deuxième flanc de guidage (118), qui sont réalisés de manière à venir en prise latéralement autour d'un profil de guidage (154) du rail de guidage (84).

4. Ensemble entraîneur (66) selon la revendication 1 ou 2, dans lequel la section de guidage (114, 132) présente au moins un rouleau de guidage (166) qui est reçu de manière rotative sur le dos (102) de l'au moins un élément entraîneur (78) et qui peut venir en prise sur le rail de guidage (84), de préférence deux rouleaux de guidage (166-1, 166-2) décalés l'un de l'autre dans la direction d'étendue principale (76), qui peuvent venir en prise du côté de la périphérie dans un profil de guidage en forme de rainure (154) du rail de guidage (84).

5. Ensemble entraîneur (66) selon l'une quelconque des revendications précédentes, dans lequel les nervures intérieures de l'au moins un élément entraîneur (78) sont réalisées de manière à venir en prise dans des espaces entre des rangées (150) du moyen de traction (52), les nervures intérieures (138) étant de préférence réalisées de manière à remplacer au moins une éclisse centrale (100, 146), en particulier deux éclisses adjacentes (100, 146) dans le cas d'un moyen de traction (52) en plusieurs rangées.

6. Ensemble entraîneur (66) selon l'une quelconque des revendications précédentes, présentant en outre au moins un élément d'appui (80) qui est adjacent à l'élément entraîneur (78), l'au moins un élément d'appui (80) présentant un dos (120) ainsi qu'un premier bras de retenue (122) et un deuxième bras de retenue (124) pour la fixation au moyen de traction (52), les éclisses (100, 146, 148) du moyen de traction (52), de préférence opposées les unes aux autres dans l'état monté, étant adjacentes, le premier bras de retenue (122) et le deuxième bras de retenue (124) pouvant être accouplés à des éléments de connexion (130) du moyen de traction (52), en particulier à des boulons de connexion (98), et le dos (120) présentant en outre une section de guidage (132) qui, dans l'état monté, est opposée au moyen de traction (52) et peut être accouplée à un rail de guidage (84) en vue du guidage latéral.

7. Ensemble entraîneur (66) selon la revendication 6, dans lequel l'au moins un élément entraîneur (78) et l'au moins un élément de d'appui (80) sont décalés l'un de l'autre dans la direction d'étendue principale (76) et sont espacés l'un de l'autre de telle sorte que dans le cas de déviations latérales du moyen de traction (52), des surfaces frontales tournées l'une vers l'autre (140, 142) des bras d'entraînement (104), des bras de support (106) et des bras de retenue (122, 124) puissent venir en contact les unes avec les autres.

8. Ensemble entraîneur (66) selon l'une quelconque des revendications 6 ou 7, dans lequel l'au moins un élément entraîneur (78) et l'au moins un élément d'appui (80) présentent, dans la région de leurs dos (102, 120), des contours d'engagement (160, 162) se correspondant mutuellement, en particulier des saillies et des évidements, qui sont réalisés de manière s'engager les uns dans les autres.

9. Ensemble entraîneur (66) selon l'une quelconque des revendications 6 à 8, dans lequel la section de guidage (132) présente au moins un rouleau de guidage (176) qui est reçu de manière rotative sur le dos (120) de l'au moins un élément d'appui (80) et qui peut venir en prise sur le rail de guidage (84), deux éléments d'appui décalés l'un de l'autre (80-1, 80-2) dans la direction d'étendue principale (76) étant prévus, lesquels présentent chacun un rouleau de guidage (176-1, 176-2), l'au moins un élément entraîneur (78) étant disposé entre les éléments d'appui (80-1, 80-2).

10. Chaîne d'entraînement (54) comprenant au moins un ensemble entraîneur (66) selon l'une quelconque des revendications précédentes, dans laquelle la chaîne d'entraînement (54) présente une pluralité de maillons (144) avec des éclisses (100, 146, 148) qui sont accouplées les unes aux autres par des boulons de chaîne, au moins certains des boulons de chaîne (98) de la chaîne d'entraînement (54) étant réalisés sous forme de boulons de connexion (98), en particulier sous forme de boulons de connexion prolongés, et étant accouplés au bras d'entraînement (104) et au bras de support (106) d'un élément entraîneur (78) de l'ensemble entraîneur (66), et l'ensemble entraîneur (66) étant fixé en vue d'un entraînement mobile sur la chaîne d'entraînement (54).

11. Chaîne d'entraînement (54) selon la revendication 10, dans laquelle l'au moins un ensemble entraîneur (66) présente en outre au moins un élément d'appui (80) adjacent à l'élément entraîneur (78), de préférence deux éléments d'appui (80) adjacents à l'élément entraîneur (78), l'au moins un élément entraîneur (78) et l'au moins un élément d'appui (80) étant fixés sur des maillons adjacents (144) de la chaîne d'entraînement (54).

12. Chaîne d'entraînement (54) selon la revendication 10 ou 11, dans laquelle l'au moins un ensemble entraîneur (66) est réalisé de manière à venir en prise sur un rail de guidage (84) en vue du guidage latéral de la chaîne d'entraînement (54), et la chaîne d'entraînement (54) présente en outre des rouleaux de glissement (96) qui sont reçus entre des éclisses (148) de la chaîne d'entraînement (54) sur les boulons de chaîne (98), les maillons (144) de la chaîne d'entraînement (54) étant réalisés de manière à venir en prise, pour le guidage de la chaîne d'entraînement (54), sur un rail de glissement (82) qui présente de préférence une voie de glissement (92) pour les rouleaux de glissement (96).

13. Chaîne d'entraînement (54) selon l'une quelconque des revendications 10 à 12, la chaîne d'entraînement (54) étant réalisée sous forme de chaîne à plusieurs rangées, en particulier sous forme de chaîne duplex ou de chaîne triplex, au moins l'au moins un élément entraîneur (78) présentant au moins une nervure intérieure (138) qui, dans l'état monté, s'engage dans des espaces entre des rangées parallèles de la chaîne d'entraînement (54).

14. Système de stockage (10), en particulier élévateur de stockage, présentant :
- un bâti (12) avec au moins une section de rayonnage (16), l'au moins une section de rayonnage (16) présentant une pluralité d'éléments de réception (18) pour des supports de marchandises à stocker (20), en particulier des étagères,
- au moins une section de manipulation (26) avec une ouverture de transfert (28), l'au moins une section de manipulation (26) étant installée notamment dans au moins une section de rayonnage (16),
- un entraînement de levage (36), en particulier un convoyeur vertical pour le soulèvement ou l'abaissement sélectif du support de marchandises à stocker (20), et
- un système de sortie (44) qui présente au moins un entraînement à chaîne (50) avec une chaîne d'entraînement (54) selon l'une quelconque des revendications 10 à 13, l'au moins un entraînement à chaîne (50) étant configuré de manière à déplacer des supports de marchandises à stocker (20) entre les sections de rayonnage (16), l'au moins une section de manipulation (26) et l'entraînement de levage (36).

15. Système de stockage (10) selon la revendication 14, présentant en outre une porte de protection (70) qui peut fermer une ouverture de transfert (28), en particulier une ouverture de transfert intérieure, de la section de manipulation (26), la porte de protection (70) étant de préférence réalisée de manière à fermer, sélectivement, l'ouverture de transfert (28) lorsqu'un support de marchandises à stocker (20) est positionné devant l'ouverture de transfert (28) dans la section de manipulation (26), et la porte de protection présentant de préférence des pattes de réception coudées latérales (74), qui sont reçues au niveau de parois intérieures (66) d'un boîtier (14) du système de stockage (10).
